# EUROPEAN PATENT APPLICATION

(11) **EP 4 550 449 A1**
(43) Date of publication of application: **07.05.2025**
(21) Application number: 22966259.8
(22) Date of filing: 25.11.2022
(51) Int. Cl.: H01M 4/133, H01M 10/00

(54) **SECONDARY BATTERY AND ELECTRICAL APPARATUS**

(71) Applicant: CONTEMPORARY AMPEREX TECHNOLOGY (HONG KONG) LIMITED, Central (HK)
(72) Inventor: LI, Yuanyuan, Ningde, Fujian 352100 (CN); SHEN, Rui, Ningde, Fujian 352100 (CN); HE, Libing, Ningde, Fujian 352100 (CN)
(74) Representative: Gong, Jinping
(86) International application number: PCT/CN2022/134438
(87) International publication number: WO 2024/108571

(57) **Abstract**

The present application provides a secondary battery and an electrical device. The negative electrode plate includes a negative electrode current collector and a negative electrode film which has a first surface away from the negative electrode current collector and a second surface opposite to the first surface and has a thickness denoted as H; a region within a thickness ranging from the second surface of the negative electrode film to 0.3 H is denoted as a first region of the negative electrode film, a region within a thickness ranging from the first surface of the negative electrode film to 0.3 H is denoted as a second region of the negative electrode film; the first region includes a first active material including a first carbon-based material and having a pore structure, and the second region includes a second active material including a second carbon-based material which has a carbon coating layer on at least part of a surface of the second carbon-based material. The present application enables the secondary batteries to have high energy density and also have good dynamic performance and storage performance.

## Description

### TECHNICAL FIELD

The present application belongs to the technical field of batteries, in particular relates to a secondary battery and an electrical device.

### BACKGROUND

In recent years, secondary batteries have been widely used in energy storage power systems such as hydro, thermal, wind and solar power plants, as well as electric tools, electric bicycles, electric motorcycles, electric vehicles, military equipment, aerospace and many other fields. With the application and promotion of secondary batteries, people have put forward serious challenges to the performance of secondary batteries, such as the requirement that secondary batteries need to have performances such as energy density, dynamic performance, and service life. However, a problem existed in the prior art is when the dynamic performance of a secondary battery is improved, it is often difficult to improve the energy density of the secondary battery, and when the energy density of a secondary battery is improved, the dynamic performance and the service life of the secondary battery will be affected.

### SUMMARY

The present application was developed in view of the above technical problems, with the purpose of providing a secondary battery and an electrical device having both high energy density and good dynamic performance and storage performance.

A first aspect of the present application provides a secondary battery, comprising a negative electrode plate, wherein the negative electrode plate comprises a negative electrode current collector and a negative electrode film formed on at least one surface of the negative electrode current collector, wherein the negative electrode film has a first surface away from the negative electrode current collector and a second surface opposite to the first surface, the negative electrode film has a thickness denoted as H, with a region within a thickness ranging from the second surface of the negative electrode film to 0.3 H being denoted as a first region of the negative electrode film, and a region within a thickness ranging from the first surface of the negative electrode film to 0.3 H being denoted as a second region of the negative electrode film, and wherein the first region comprises a first active material comprising a first carbon-based material having a pore structure and the second region comprises a second active material comprising a second carbon-based material which has a carbon coating layer on at least part of a surface of the second carbon-based material .

Trough in-depth research, the inventors have found that by making the second region of the negative film layer include the second carbon-based material having a carbon coating layer on at least part of a surface thereof and making the first region of the negative film layer include the first carbon-based material having a pore structure, the first carbon-based material and the second carbon-based material produce excellent synergistic advantages. Accordingly, the negative electrode plate provided in the present application may have a good pore structure, as well as high compaction density, low volume change and high active ion transport speed. As a result, in addition to high energy density, the secondary battery can have both good dynamic performance and storage performance.

In some embodiments of the present application, the second carbon-based material comprises secondary particles; and optionally, the quantity proportion of the secondary particles in the second carbon-based material is greater than or equal to 50%, and optionally from 60% to 80%. Under the condition that the second carbon-based material comprises an appropriate proportion of secondary particles, the active ion channels in the negative electrode film can be increased and the active ion intercalating path can be shortened, so that the dynamic performance of the secondary battery can be further improved, and the polarization of the battery can be reduced and the side reaction can be reduced. As a result, the secondary battery can have good cycling performance and also have good dynamic performance.

In some embodiments of the present application, the second carbon-based material has a graphitization degree less than that of the first carbon-based material. By adjusting the graphitization degree of the second carbon-based material to be less than that of the first carbon-based material, it is conducive to rendering the secondary battery high energy density and good dynamic performance.

In some embodiments of the present application, the second carbon-based material has a specific capacity less than that of the first carbon-based material. By combining the first carbon-based material having a high capacity with the second carbon-based material having the carbon coating layer, it is conducive to rendering the secondary battery high energy density and good dynamic performance.

In some embodiments of the present application, the second carbon-based material includes at least one of artificial graphite or natural graphite. Optionally, the second carbon-based material includes artificial graphite

In some embodiments of the present application, the second carbon-based material has a graphitization degree of from 90.0% to 95.5%, and optionally from 90.5% to 95.5%. Under the condition that the graphitization degree of the second carbon-based material falls within the above ranges, it is conducive to improving the active ion transport performance of the negative electrode film. As a result, the secondary battery can have high energy density and also have good cycling performance and dynamic performance.

In some embodiments of the present application, the second carbon-based material has a powder OI value of from 2.0 to 6.5, and optionally from 2.0 to 6.0. The second carbon-based material powder has the small OI value, and thus there is access for the intercalation of active ions in all directions of the particles, which can therefore quickly receive active ions from the positive electrode. Accordingly, the dynamic performance of the secondary battery can be further improved.

In some embodiments of the present application, the second carbon-based material has a volume average particle size Dv50 of 10.0 µm to 22.0 µm, and optionally from 11.5 µm to 20.0 µm. Under the condition that the volume average particle size Dv50 of the second carbon-based material falls within the above ranges, on one hand, it is conducive to enhancing the transport performance of active ions and electrons, and further enhancing the dynamic performance of the secondary battery; and on the other hand, it is conducive to reducing the specific surface area of the second carbon-based material and reducing the side reactions, so as to enhance the storage performance of the secondary battery.

In some embodiments of the present application, the second carbon-based material has a particle size distribution (Dv90-Dv10)/Dv50 of ≤1.65, and optionally from 0.90 to 1.65. Under the condition that the second carbon-based material has the particle size distribution (Dv90-Dv10)/Dv50 falling within the above ranges, it has a better particle accumulating performance. Accordingly, on one hand, it is conducive to improving the compaction density of the negative electrode film, and in turn improving the energy density of the secondary battery; on the other hand, it is conducive to forming suitable pore distribution of the negative electrode film, and in turn improving the dynamic performance of the secondary battery.

In some embodiments of the present application, the second carbon-based material has a tap density of 0.85 g/cm³ to 1.25 g/cm³, and optionally from 0.9 g/cm³ to 1.25 g/cm³. Under the condition that the tap density of the second carbon-based material falls within the above ranges, the compaction density of the negative electrode film can be improved, and further the energy density of the secondary battery can be improved. Moreover, it is conducive to improving the compaction density of the negative electrode film, and in turn improving the energy density of the secondary battery; on the other hand, it is conducive to forming suitable pore distribution of the negative electrode film, thereby improving the performance of active ions and electrons and further improving the wettability of the negative electrode film on the electrolytic solution. As a result, the dynamic performance and/or cycle performance of the secondary battery can be improved.

In some embodiments of the present application, the second carbon-based material has a specific capacity of from 340 mAh/g to 360 mAh/g, and optionally from 345 mAh/g to 360 mAh/g. Under the condition that the specific capacity of the second carbon-based material falls within the above ranges, on one hand, the energy density of the secondary battery can be improved; and on the other hand, the second carbon-based material can have good active ion transport performance, which is conducive to improving the dynamic performance of the secondary battery.

In some embodiments of the present application, the first carbon-based material has a specific surface area of ≤ 2.5 m²/g, and optionally from 0.95 m²/g to 2.5 m²/g². Under the condition the specific surface area of the second carbon-based material falls within the above ranges, it is conducive to reducing the side reactions and reducing the consumption of active ions in SEI film formation. As a result, the secondary battery can have high first columbic efficiency and also have good cycling performance and storage performance.

In some embodiments of the present application, the second carbon-based material satisfies I_{D}/I_{G} ≥ 0.280, and optionally 0.280 ≤ I_{D}/I_{G} ≤ 0.500, in which I_{D} represents the D peak intensity at 1350 ± 50cm⁻¹ of its Raman spectrum and I_{G} represents the G peak intensity at 1580 ± 50cm⁻¹ of its Raman spectrum. Under the condition that the I_{D}/I_{G} of the second carbon-based material falls within the above ranges, the active ion transport performance thereof is better, which is conducive to improving the dynamic performance of the secondary battery.

In some embodiments of the present application, the first carbon based material has a carbon coating layer on at least part of a surface thereof.

In some embodiments of the present application, the first carbon-based material includes at least one pore structure with a pore area greater than or equal to 0.15 µm², and optionally at least one pore structure with a pore area of from 0.15 µm² to 2.0 µm². Under the condition that the first carbon-based material includes the pore structure having the above sizes, the pore structure can reserve the expansion space for the particle volume change, thereby reducing the risk of occurrence of new interfaces resulting from particle breakage and further reducing side reactions. As a result, the storage performance of the secondary battery can be improved.

In some embodiments of the present application, the first carbon-based material comprises an external region and an internal region located on the inside of the external region, with the external region being a region formed from extending a distance of 0.25 L from the surface of the particles of the first carbon-based material towards the interior of the particles, and L being the short-axis length of the particles of the first carbon-based material, and wherein the total pore area of the external region is denoted as S₁, the total pore area of the internal region is denoted as S₂, and S₂ > S₁. Under the condition that the first carbon-based material further satisfies S₂ > S₁, the initial columbic efficiency of the secondary battery can be further improved, and further the storage performance of the secondary battery can be improved.

In some embodiments of the present application, 1.5 ≤ S₂/S₁ ≤ 500, and optionally 2 ≤ S₂/S₁ ≤ 450. Under the condition that S₂/S₁ of the first carbon-based material falls within the above ranges, the secondary battery can have high energy density and also have good storage performance.

In some embodiments of the present application, the pore structure in the external region of the first carbon-based material has an area of less than or equal to 0.15 µm², and optionally less than or equal to 0.10 µm². By controlling the area of the pore structure in the external region of the first carbon-based material to fall within the above ranges, the external region of the first carbon-based material can have a dense structure, thereby effectively improving the structural stability of the first carbon-based material and further avoiding the penetration of the electrolytic solution into the pore structure inside the particles of the first carbon-based material as much as possible; accordingly, the side reactions are reduced and thus the storage performance of the secondary battery can be effectively improved.

In some embodiments of the present application, the pore structure in the internal region of the first carbon-based material comprises at least one pore structure having an area greater than or equal to 0.15 µm², and optionally at least one pore structure having an area of from 0.15 µm² to 2.0 µm². By making the internal region of the first carbon-based material include a pore structure having the above sizes, on one hand, the rolling pressure on the negative electrode plate can be effectively reduced, which can effectively minimize particle damage, and a sufficient and stable expansion space can be reserved for the volume change of the first carbon-based material particles, which can reduce the risk of breakage of the first carbon-based material particles; and on the other hand, the compaction density of the negative electrode film and thus the energy density of the secondary battery can be improved.

In some embodiments of the present application, the first carbon based material comprises primary particles; and optionally, the quantity proportion of the primary particles in the first carbon based material is greater than or equal to 50%. Under the condition that the first carbon-based material contains an appropriate proportion of primary particles, it may have high structural stability, which may reduce the side reactions; accordingly, the storage performance of the secondary battery can be improved. In addition, the compaction density of the negative electrode film can be increased, which in turn can increase the energy density of the secondary battery.

In some embodiments of the present application, the first carbon based material satisfies 0.152 ≤ I_{D}/I_{G} ≤ 0.280, and optionally 0.155 ≤ I_{D}/I_{G} ≤ 0.220, in which I_{D} represents the D peak intensity at 1350 ± 50cm⁻¹ of its Raman spectrum, and I_{G} represents the G peak intensity at 1580 ± 50cm⁻¹ of its Raman spectrum. Under the condition that I_{D}/I_{G} of the first carbon-based material falls within the above ranges, the first carbon-based material can have less disordered carbon, higher specific capacity and higher chemical stability; accordingly, the side reactions can be reduced and the energy density and storage performance of the secondary battery can be improved.

In some embodiments of the present application, the first carbon-based material has a diffraction peak of 101 crystal plane of the 3R phase in its X-ray diffraction pattern. Therefore, there are more active sites on the surface of the first carbon-based material, which is conducive to the rapid intercalation and deintercalation of active ions.

In some embodiments of the present application, the first carbon-based material does not have a diffraction peak of 012 crystal plane of the 3R phase in its X-ray diffraction pattern. Therefore, the first carbon-based material particles have fewer internal defects; accordingly, the side reactions and thus the irreversible consumption of active ions are reduced, and further the first columbic efficiency and storage performance of the secondary battery are improved.

In some embodiments of the present application, the first carbon-based material has a specific surface area of from 1.0 m²/g to 2.1 m²/g, and optionally from 1.1 m²/g to 2.0 m²/g. The first carbon-based material has a low specific surface area, thus the consumption of active ions for the SEI membrane formation can be reduced, and the initial columbic efficiency and storage performances of the secondary battery can be improved.

In some embodiments of the present application, the first carbon-based material has a volume average particle size Dv50 of 8.0 µm to 25.0µm, and optionally from 8.0 µm to 22.0 µm.

In some embodiments of the present application, the first carbon-based material has a volume average particle size Dv90 of 16.0 µm to 45.0µm, and optionally from 16.5 µm to 42.0 µm.

Under the condition that the volume average particle size Dv50 and/or Dv90 of the first carbon-based material falls within the above ranges, on one hand, it is conducive to improving the transport performance of active ions and electrons, which can further improve the dynamic performance of the secondary battery; and on the other hand, it is conducive to reducing the specific surface area of the first carbon-based material and thus reducing the side reactions, accordingly, the storage performance of the secondary battery can be improved.

In some embodiments of the present application, the first carbon-based material has a particle size distribution (Dv90-Dv10)/Dv50 of ≤ 1.55, and optionally from 0.9 to 1.50. Under the condition that the particle size distribution (Dv90-Dv10)/Dv50 of the first carbon-based material falls within the above ranges, the first carbon-based material has better particle accumulating performance, which is conducive to improving the compaction density of the negative electrode film and thus improving the energy density of the secondary battery; furthermore, it is conducive to adjusting the pore distribution and in turn improving the dynamic performance of the secondary battery.

In some embodiments of the present application, the first carbon-based material has a powder compaction density under a pressure of 20000N of 1.65 g/cm³ to 2.0 g/cm³, and optionally from 1.68 g/cm³ to 1.98 g/cm³. Under the condition that the powder compaction density of the first carbon-based material falls within the above ranges, the compaction density of the negative electrode film and thus the energy density of the secondary battery can be improved. Moreover, it is conducive to the formation of a suitable pore structure among the particles of negative electrode film and is conducive to improving transport performance of active ions and electrons; accordingly, the dynamic performance of the secondary battery can be improved.

In some embodiments of the present application, the first carbon-based material has a tap density of from 0.85 g/cm³ to 1.30 g/cm³, and optionally from 0.90 g/cm³ to 1.25 g/cm³. Under the condition that the tap density of the first carbon-based material falls within the above ranges, the compaction density of the negative electrode film and thus the energy density of the secondary battery can be improved. Moreover, it is conducive to the formation of a suitable pore structure among the particles of negative electrode film and further is conducive to improving transport performance of active ions and electrons; accordingly, the dynamic performance of the secondary battery can be improved.

In some embodiments of the present application, the first carbon-based material has a specific capacity of ≥ 355 mAh/g, and optionally from 355 mAh/g to 370 mAh/g. Under such circumstances, the energy density of the secondary battery can be improved.

In some embodiments of the present application, the first carbon-based material has a graphitization degree of ≥ 95.5%, and optionally from 95.5% to 98%. Under such circumstances, the energy density of the secondary battery can be improved.

In some embodiments of the present application, the first carbon-based material has a weight loss rate of ≤ 52% and optionally from 8% to 48% at a temperature of from 35°C to 790°C, as determined by thermal weight loss analysis under air atmosphere. Under such circumstances, the first carbon-based material may have fewer surface defects and/or bulk phase defects, which can reduce the consumption of active ions during the storage process of the secondary battery; accordingly, the energy density storage performance of the secondary battery can be improved.

In some embodiments of the present application, the first carbon-based material has a maximum weight loss rate of ≤ 5.0%/min and optionally of ≤ 4.8%/min, as determined by thermal weight loss analysis under air atmosphere. Under such circumstances, the first carbon-based material may have fewer surface defects and/or bulk phase defects, which can reduce the consumption of active ions during the storage process of the secondary battery; accordingly, the energy density storage performance of the secondary battery can be improved.

In some embodiments of the present application, the first active material further comprises a third carbon-based material comprising an artificial graphite having a morphology of primary particles. Under the condition that the first carbon-based material and the third carbon-based material are combined, it is conducive to forming suitable pore structure for the negative electrode film and is conducive to improving the active ion transport performance of the negative electrode film.

In some embodiments of the present application, the artificial graphite having the morphology of primary particles does not have a carbon coating layer on its surface. The artificial graphite having a morphology of primary particle has a relatively stable surface, under the condition that the artificial graphite having a morphology of primary particle does not have a carbon coating layer on its surface, it is conducive to maintaining the low side-reaction activity thereof and thus reducing the side reactions, so the cycle performance and storage performance of the secondary battery can be further improved.

In some embodiments of the present application, the third carbon-based material has a mass proportion, in the first active material, of less than or equal to 70 wt%, and optionally from 15 wt% to 60 wt%.

In some embodiments of the present application, the third carbon-based material has a graphitization degree of from 92.5% to 95.5%, and optionally from 92.7% to 95.5%. Under the condition that the graphitization degree of the third carbon-based material falls within the above ranges, it is conducive to improving the active ion transport performance of the negative electrode film, especially in the first region; accordingly, the secondary battery can have the high energy density and also have good dynamic performance.

In some embodiments of the present application, the third carbon-based material has a powder OI value of from 4.5-11.5, and optionally from 4.5 to 11.0. The third carbon-based material has low powder OI value and thus has accesses for the intercalating of active ions in all directions, thereby receiving active ions from the positive electrode quickly; accordingly, the dynamic performance of the secondary battery can be further improved.

In some embodiments of the present application, the third carbon-based material has a particle size distribution (Dv90-Dv10)/Dv50 of ≤ 1.65, and optionally from 0.90 to 1.65. Under the condition that the particle size distribution of the third carbon-based material (Dv90-Dv10)/Dv50 falls within the above ranges, the third carbon-based material has better accumulating performance, which is conducive to improving the compaction density of the negative electrode film layer and in turn improving the energy density of the secondary battery. Moreover, it is conducive to adjusting the pore distribution of the negative electrode film layer and in turn improving the dynamic performance of the secondary battery.

In some embodiments of the present application, the third carbon-based material has a volume average particle size Dv50 of from 12.0 µm to 22.0 µm, and optionally from 13.5 µm to 20.0 µm. Under the condition that the volume average particle size Dv50 of the third carbon-based material falls within the above ranges, it is conducive to improving the transport performance of active ions and electrons, which can further improve the dynamic performance of the secondary battery. In addition, the specific surface area of the third carbon-based material is reduced and in turn the side reactions are reduced, so the storage performance of the secondary battery can be improved.

In some embodiments of the present application, the specific surface area of the third carbon-based material is from 1.0 m²/g to 2.0 m²/g, and optionally from 1.05 m²/g to 1.95 m²/g. Since the third carbon-based material has a low specific surface area, the consumption of active ions in SEI film formation and thus the side reactions can be reduced. Accordingly, the initial columbic efficiency and storage performance of the secondary battery can be improved.

In some embodiments of the present application, the third carbon-based material has a tap density of from 0.95 g/cm³ to 1.25 g/cm³, and optionally from 1.00 g/cm³ to 1.25 g/cm³. Under the condition that the tap density of the third carbon-based material falls within the above ranges, the compaction density of the negative electrode film and thus the energy density of the secondary battery can be improved. Moreover, it is conducive to forming a suitable pore structure among the particles of the negative electrode film layer, so as to improve the transport performance of active ions and electrons, and further improve the dynamic performance of the secondary battery.

In some embodiments of the present application, the third carbon-based material has a specific capacity of from 350 mAh/g to 363 mAh/g, and optionally from 352 mAh/g to 362 mAh/g. Under the condition that the specific capacity of the third carbon-based material falls within the above ranges, on one hand, it is conducive to improving the energy density of the secondary battery; and on the other hand, it is conducive to improving the transport performance of active ions and electrons, and further improving the dynamic performance of the secondary battery.

In some embodiments of the present application, the first region and/or the second region further comprises a silicon-based material. The silicon-based material may improve the pore structure in the negative electrode film to facilitate the wettability and retention of electrolytic solution, thereby improving the dynamic performance of the secondary battery. Moreover, the capacity of the negative electrode can be improved, and the energy density of the secondary battery can be further improved.

In some embodiments of the present application, the first region and the second region comprise a silicon-based material, and the mass proportion of the silicon-based material in the first region is less than or equal to that of the silicon-based material in the second region. Under such circumstances, it is conducive to improving the wettability of the negative electrode film to the electrolytic solution and thus the transport performance of active ions. Accordingly, the cyclic performance and/or dynamic performance of the secondary battery can be improved.

In some embodiments of the present application, the first active material and/or the second active material is comprised in the intermediate region located between the first region and the second region.

In some embodiments of the present application, the negative electrode film layer has a porosity of from 18.0% to 36.7%, and optionally from 19.0% to 34.0%. Under such circumstances, the negative electrode film may have high capacity and also have suitable pore structure; as a result, the secondary battery may have high energy density and also have good storage performance and dynamic performance.

In some embodiments of the present application, the negative electrode film layer has a compaction density of from 1.45 g/cm³ to 1.90 g/cm³, and optionally from 1.50 g/cm³ to 1.85 g/cm³. Under such circumstances, the negative electrode film may have high capacity, good active ion and electron transport performance; as a result, the secondary battery may have high energy density and also good storage performance and dynamic performance.

In some embodiments of the present application, the negative electrode film layer has an areal density of from 5.0 mg/cm² to 25.0 mg/cm², and optionally from 5.5 mg/cm² to 22.5 mg/cm². Under such circumstances, the negative electrode film may have high capacity, good active ion and electron transport performance; as a result, the secondary battery may have high energy density and also good storage performance and dynamic performance.

In some embodiments of the present application, the negative electrode film layer has an OI value of less than or equal to 35.0, and optionally from 8.0 to 35.0. Under such circumstances, the intercalating performance of the active ions of the negative electrode film can be improved and the negative electrode film can have a lower rebound rate in terms of the thickness; as a result, the secondary battery can have good storage performance and also have good dynamic performance.

In some embodiments of the present application, the negative electrode film layer has a thickness of from 70 µm to 250 µm and optionally from 90 µm to 220 µm.

A second aspect of the present application provides an electrical device comprising the secondary battery of the first aspect of the present application.

The electrical device of the present application comprises the secondary battery provided in the present application and thus has the corresponding advantages at least same as the secondary battery.

### DESCRIPTION OF THE DRAWINGS

In order to explain the technical solutions of the embodiments of the present application more clearly, the drawings that need to be used in the embodiments of the present application will be briefly introduced. Apparently, the drawings described below are only some embodiments of the present application. A person of ordinary skill in the art can obtain other drawings based on the accompanying drawings without the need of creative work.
FIG. 1 is a schematic diagram of a negative electrode plate according to an embodiment of the present application.
FIG. 2 is a schematic diagram of a negative electrode plate according to another embodiment of the present application.
FIG. 3 is a schematic diagram of a negative electrode plate according to a further embodiment of the present application.
FIG. 4 is a schematic diagram of a cross-sectional image of a particle of a first carbon-based material of the present application.
FIG. 5 is a schematic diagram of a secondary battery according to an embodiment of the present application.
FIG. 6 is an exploded view of a secondary battery according to an embodiment of the present application.
FIG. 7 is a schematic diagram of a battery module according to an embodiment of the present application.
FIG. 8 is a schematic diagram of a battery pack according to an embodiment of the present application.
FIG. 9 is an exploded view of the battery pack according to the embodiment of the present application as shown in FIG. 8.
FIG. 10 is a schematic diagram of an electrical device according to an embodiment of the present application using the secondary battery of the present application as power.

The drawings are not drawn to actual scale. Reference numerals are as follows: 1. Battery pack; 2. Upper box body; 3. Lower box body; 4. Battery module; 5. Secondary battery; 51. Housing; 52. Electrode assembly; 53. Cover plate; 10. Negative electrode plate, 101. Negative electrode current collector, 102. Negative electrode film, 102. First surface, 102b. Second surface, 1021. First region, 1022. Second region, 1023. Intermediate region, 200. First carbon-based material; 201. External region; 202. Internal region.

### DETAILED DESCRIPTION

Hereinafter, embodiments of the secondary battery and the electrical device will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4, and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, such as, an integer of 2, 3, 4, 5, 6, 7, 8, 9, 10, 11, and 12.

Unless stated otherwise, all the embodiments and the optional embodiments of the present application can be combined with each other to form a new technical solution, and such technical solution should be considered to be included in the disclosure of the present application.

Unless stated otherwise, all technical features and optional technical features of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, "the method includes steps (a) and (b)" means that the method may include steps (a) and (b) performed in sequence, or that the method may include steps (b) and (a) performed in sequence. For example, "the method further comprises step (c)" indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

Unless stated otherwise, the terms used in the present application have the well-known meanings commonly understood by those skilled in the art.

Unless stated otherwise, the values of the parameters mentioned in the present application may be determined by various test methods commonly used in the art, for example, according to the test methods given in the present application.

Unless stated otherwise, in the present application, the term "active ions" refers to ions, including but not limited to lithium ions, that can repeatedly intercalated into and deintercalated out between the positive electrode and the negative electrode of the secondary battery

In the present application herein, the term "more than one" means two or more than two, unless otherwise stated and specifically limited.

The inventors have found that the key to improve the dynamic performance, especially the rapid charging performance of secondary batteries is to improve the dynamic performance of the negative electrode. Currently, the dynamic performance of a negative electrode is mostly improved by reducing the area density of the negative electrode film or reducing the compaction density of the negative electrode film. However, a large number of studies have proved that the above methods to improve the dynamics of the negative electrode only improve the dynamic performance of the battery at the early charging stage to a certain extent, and have no obvious effect on the improvement of the dynamics at the end of the battery charging stage, which results in the failure to effectively improve the dynamic performance of the secondary battery, and even leads to the impossibility of charging the secondary battery with large rate in practice. In addition, the energy density of the secondary battery may be significantly reduced.

When the energy density of a secondary battery is improved by, for example, increasing the compaction density of the negative electrode film, the dynamics performance of the secondary battery often deteriorates; in addition, if the compaction density is high, the wettability of the electrolytic solution to the negative electrode film becomes worse, and the risk of particle breakage of the negative active material increases. Accordingly, the side reactions in the battery increase, which will affects the storage performance of the secondary battery.

As a result, it is difficult for current secondary batteries to have high energy density and have good dynamics and storage performance.

The inventors have further conducted a lot of research and skillfully improved the composition of the negative electrode film to break the above bottleneck.

Specifically, a first aspect of the embodiments of the present application provides a secondary battery.

The present application has no particular limitation on the type of the secondary battery, for example, the secondary battery may be a lithium-ion battery or the like. Typically, the secondary battery comprises a positive electrode plate, a negative electrode plate, and an electrolyte and the like. During the charging and discharging process of the secondary battery, active ions are embedded and de-embedded back and forth between the positive electrode plate and the negative electrode plate, and the electrolyte plays the role of conducting active ions between the positive electrode plate and the negative electrode plate. The present application has no particular limitation on the type of the electrolyte, which may be selected according to actual needs. For example, the electrolyte may be selected from at least one of a solid electrolyte and a liquid electrolyte (i.e., an electrolytic solution). In the secondary battery employing an electrolytic solution, and in some secondary batteries employing a solid electrolyte, a separator may be included, which is provided between the positive electrode plate and the negative electrode plate to serve as a separator.

### [Negative electrode plate]

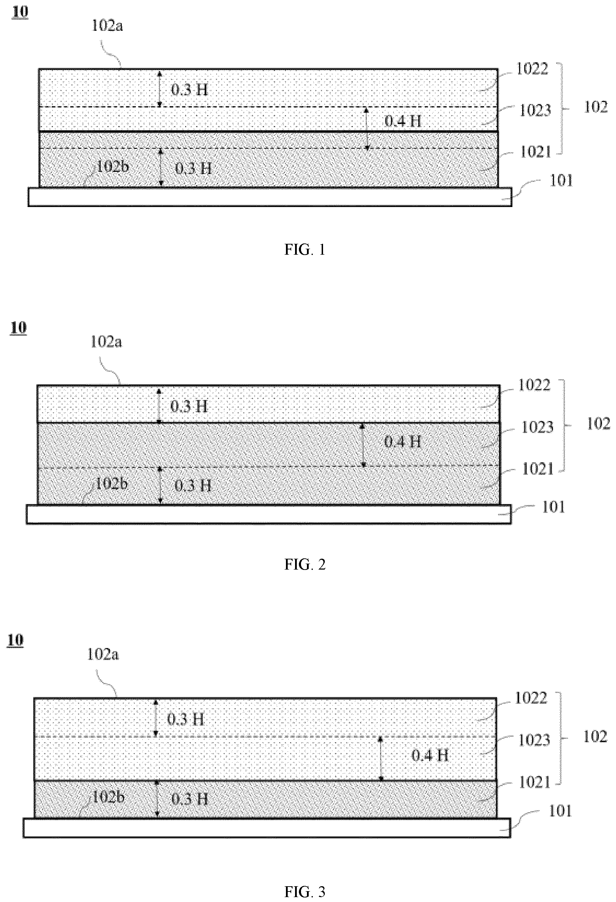

FIGS. 1 to 3 are schematic diagrams of a negative electrode plate according to an embodiment of the present application. As shown in FIGS. 1 to 3, the negative electrode plate 10 comprises a negative electrode current collector 101 and a negative electrode film 102 formed on at least one surface of the negative electrode current collector 101; the negative electrode film 102 has a first surface 102a away from the negative electrode current collector 101 and a second surface 102b opposite to the first surface 102a, a thickness of the negative electrode film 102 being denoted as H, a region within a thickness ranging from the second surface 102b of the negative electrode film to 0.3 H being denoted as a first region 1021 of the negative electrode film, a region within a thickness ranging from the first surface 102a of the negative electrode film to 0.3 H being denoted as a second region 1022 of the negative electrode film; the first region 1021 comprises a first active material comprising a first carbon-based material which has a pore structure, and the second region 1022 includes a second active material comprising a second carbon-based material which has a carbon coating layer on at least part of a surface of the second carbon-based material. The thickness H of the negative electrode film is a thickness of the negative electrode film located on a single side of the negative electrode current collector.

In the present application, "the first carbon-based material having a pore structure" means that the first carbon-based material has a pore structure that can be directly observed from a cross-sectional image (e.g., a scanning electron microscope image with a magnification of 1000 times), i.e., the pore structure in basic structure of the raw material used to prepare the first carbon-based material is not completely filled.

The inventors have found in their research that the secondary battery can have high energy density and also have good dynamic performance and storage performance by making the first region of the negative electrode film comprise the first carbon-based material and the second carbon-based material comprise the second carbon-based material, and by using the first carbon-based material having a pore structure and using the second carbon-based material which has a carbon coating layer on at least part of the surface of the second carbon-based material.

Since the second carbon-based material has a carbon coating layer on at least part of its surface, good dynamic properties will be obtained. Accordingly, it is conducive to improving the speed of active ions intercalating into the negative electrode film, improving the transport performance of the active ions of the negative electrode film, and accordingly improving the dynamic performance of the secondary battery. Moreover, the second carbon-based material is located in the second region of the negative electrode film, which is conducive to exhibiting the excellent dynamic properties thereof, and improving the wettability and retention characteristics of the negative electrode film on the electrolytic solution.

Since the first carbon-based material has a pore structure, it has a large compaction density. Accordingly, the compaction density of the negative electrode film and thus the energy density of the secondary battery can be improved. Moreover, the first carbon-based material is likely to deform during cold pressing, so when it is located in the first region of the negative electrode film, the roller pressure on the negative electrode plate can be effectively reduced, and thus can effective reduce the particle damage and the side reactions. The first carbon-based material has a pore structure, which may reserve the expansion space for the particle volume change; accordingly, the risk of particle breakage resulting from new surface and further the side reactions can be reduced. When the first carbon-based material is located in the first region of the negative electrode film, it can exhibit the advantages of high capacity and high compaction density thereof, so as to improve the energy density of the secondary battery.

The inventors have found in the lubricated study that the synergistic advantage of the first carbon-based material and the second carbon-based material can exhibit by making the second region of the negative electrode film layer include the second carbon-based material having a carbon coating layer on at least part of a surface of the second carbon-based material and making the first region of the negative electrode film layer include the first carbon-based material having a pore structure. As a result, the negative electrode plate provided in the present application may have a good pore structure and also have high compaction density, small volume change and high transport speed of active ions; moreover, the secondary battery may have high energy density and also have good dynamic performance and storage performance.

In some embodiments, the second carbon-based material includes the secondary particles. Optionally, the number portion of the secondary particles in the second carbon-based material is greater than or equal to 50%, optionally 55%-95%, 55%-90%, 55%-85%, 55%-80%, 60%-95%, 60%-90%, 60%-85%, and 60%-80%. When the second carbon-based material contains an appropriate proportion of secondary particles, the active ion channel in the negative electrode film can be increased, and the intercalating path of the active ions can be shortened, so as to further improve the dynamic performance of the secondary battery; moreover, the polarization of the battery and the side reactions are reduced, so that the secondary battery may have good storage performance.

In the present application, the quantity proportion of secondary particles in the second carbon-based material is determined as follows: a test sample is taken from the negative electrode film layer, and multiple test areas are taken from the test sample; the images of the multiple test areas are obtained by scanning electron microscopy; and the quantity proportion of the second carbon-based materials having a morphology of secondary particles in each image to the total number of particles of the second carbon-based materials is calculated, and the average of the multiple statistical results is the quantity proportion of the secondary particles in the second carbon-based material.

In some embodiments, the second carbon-based material includes at least one of artificial graphite or natural graphite; and optionally, the second carbon-based material includes artificial graphite.

In some embodiments, the second carbon-based material includes the artificial graphite having the carbon coating layer on at least part of its surface; and optionally, the artificial graphite having the morphology of secondary particles, in the second carbon-based material, has a quantity proportion of greater than or equal to 50%, and optionally 55%-95%, 55%-90%, 55%-85%, 55%-80%, 60%-95%, 60%-90%, 60%-85%, and 60%-80%.

In the present application, the quantity proportion of artificial graphite having the morphology of secondary particles in the second carbon-based material is determined as follows: a test sample is taken from the negative electrode film layer, and multiple test areas are taken from the test sample; the images of the multiple test areas are obtained by scanning electron microscopy; and the quantity proportion of the artificial graphite having the morphology of secondary particles in the second region of the negative electrode film in each image to the total number of particles of the second carbon-based materials is calculated, and the average of the multiple statistical results is the quantity proportion of artificial graphite having the morphology of secondary particle in the second carbon-based material.

In some embodiments, 80% or above of the surface of the second carbon-based material is covered with the carbon coating layer, and optionally, from 90% to 100% of the surface of the second carbon-based material is covered with the carbon coating layer.

In some embodiments, the carbon in the coating layer on the surface of the second carbon-based material includes amorphous carbon, which is conducive to improving the dynamic performance of the secondary battery. The carbon may be obtained from an organic carbon source via a carbonization. The organic carbon source may be a carbon-containing material well-known in the art and suitable for being coated, including, for example, one or more of coal pitch, petroleum pitch, phenolic resin, coconut husk, etc.

In some embodiments, the graphitization degree of the second carbon-based material is less than the graphitization degree of the first carbon-based material. Since the second carbon-based material has a lower graphitization degree, it has a larger layer spacing, which is conducive to the rapid intercalation and deintercalation of active ions. Since the first carbon-based material has a higher graphitization degree, it has a higher specific capacity. Therefore, by adjusting the graphitization degree of the second carbon-based material to be less than the graphitization degree of the first carbon-based material, it is conducive to rendering the secondary battery high energy density and good dynamic performance.

In some embodiments, the specific capacity of the second carbon-based material is less than that of the first carbon-based material. By combining the first carbon-based material having high capacity and the second carbon-based material having a carbon coating layer, the secondary battery can have high energy density and also have good dynamic performance.

Through further studying, the inventors have found that under the condition that the second carbon-based material satisfies one or more of the following conditions in addition to satisfying the above design requirements, the performance of the secondary battery can be further improved, such as improved energy density, storage performance, dynamic performance and cycle performance of the secondary battery.

In some embodiments, the graphitization degree of the second carbon-based material is from 90.0% to 95.5%, and optionally from 90.5% to 95.5%. Under the condition that the graphitization degree of the second carbon-based material falls within the above ranges, it is conducive to improving the transport performance of the active ions of the negative electrode film, so the secondary battery can have high energy density and also have good dynamic performance.

In some embodiments, the powder OI value of the second carbon-based material is from 2.0 to 6.5, and optionally from 2.0 to 6.0. The second carbon-based material powder has a small OI value, thus, the particles have accesses for intercalating active ions in all directions, thereby quickly receiving active ions from the positive electrode; accordingly, the dynamic performance of the secondary battery can be further improved.

In some embodiments, the volume average particle size Dv50 of the second carbon-based material is from 10.0 µm to 22.0 µm, and optionally from 11.5 µm to 20.0 µm. Under the condition that the volume average particle size Dv50 of the second carbon-based material falls within the above ranges, on one hand, it is conducive to improving the transport performance of active ions and electrons, which can further improve the dynamic performance of the secondary battery; and on the other hand, it is conducive to reducing the specific surface area of the second carbon-based material and the side reactions, thereby improving the storage performance of the secondary battery.

In some embodiments, the particle size distribution (Dv90-Dv10)/Dv50 of the second carbon-based material is ≤1.65, and optionally from 0.90 to 1.65. Under the condition that the particle size distribution of the second carbon-based material (Dv90-Dv10)/Dv50 falls within the above ranges, on one hand, the particle accumulating performance is better, thereby improving the compaction density of the negative electrode film layer and further improving the energy density of the secondary battery; on the other hand, it is conducive to rendering the negative electrode film suitable pore distribution, thereby improving the dynamic performance of the secondary battery.

In some embodiments, the tap density of the second carbon-based material is from 0.85 g/cm³ to 1.25 g/cm³, and optionally rom 0.90 g/cm³ to 1.25 g/cm³. Under the condition that the tap density of the second carbon-based material falls within the above ranges, on one hand, the compaction density of the negative electrode film may be increased, so the energy density of the secondary battery can be increased; on the other hand, it is conducive to rendering the negative electrode film a suitable pore distribution, thereby improving the performance of active ions and electrons and the wettability of the negative electrode film on the electrolytic solution, and thus improving the dynamic performance and/or cycle performance of the secondary battery.

In some embodiments, the specific capacity of the second carbon-based material is from 340 mAh/g to 360 mAh/g, and optionally from 345mAh/g to 360mAh/g. Under the condition that the specific capacity of the second carbon-based material falls within the above ranges, on one hand, the energy density of the secondary battery can be improved, and on the other hand, the second carbon-based material can have good active ion transport performance, so the dynamic performance of the secondary battery is improved.

In some embodiments, the specific surface area of the second carbon-based material is ≤ 2.5 m²/g, and optionally from 0.95 m²/g to 2.5 m²/g or from 0.95 m²/g to 2.45 m²/g. Under the condition that the specific surface area of the second carbon-based material falls within the above ranges, it is conducive to reducing the side reactions and the consumption of active ions in SEI film formation, so that the secondary battery can have high first coulomb efficiency and also good cycling performance and storage performance.

In some embodiments, the second carbon-based material satisfies I_{D}/I_{G} ≥ 0.280, and optionally, 0.280 ≤ I_{D}/I_{G} ≤ 0.500, in which I_{D} represents the D-peak intensity at 1350 ± 50cm⁻¹ of its Raman spectrum, and I_{G} represents the G peak intensity at 1580 ± 50cm⁻¹ of its Raman spectrum. Under the condition that the I_{D}/I_{G} of the second carbon-based material falls within the above ranges, the transport performance of the active ions of the second carbon-based material is better, it is conducive to improving the dynamic performance of the secondary battery.

In some embodiments, the first carbon-based material has a carbon coating layer on at least part of its surface. Optionally, the first carbon-based material has a carbon coating layer on 80% or above of its surface. Further optionally, the first carbon-based material has a carbon coating layer on 90% to 100% of its surface.

In some embodiments, the carbon coating layer includes an amorphous carbon and/or a crystalline carbon having a graphitization degree of from 65% to 89%. Thus, the dynamic performance of the secondary battery can be improved.

Of course, in some embodiments, the first carbon-based material may not have a carbon coating layer. The first carbon-based material of the application has a relatively stable surface, and when the surface does not have a carbon coating layer, it is conducive to maintaining its low side reaction activity and thus reducing the side reactions. Accordingly, the cycle performance and/or storage performance of the secondary battery can be further improved.

In some embodiments, the first carbon-based material includes no less one pore structure with a pore area greater than or equal to 0.15 µm², optionally at least one pore structure with a pore area of from 0.15 µm² to 2.0 µm². Under the condition that the first carbon-based material comprises a pore structure having the pore area as described above, the pore structure can reserve the expansion space for the volume change of the particle, thereby further reducing the risk of the particle breakup generating a new interface and further minimizing the side reactions; accordingly, the storage performance of the secondary battery can be improved.

In some embodiments, the first carbon-based material comprises an external region and an internal region located on the inside of the external region, with the external region being a region formed from extending a distance of 0.25 L from the surface of the particles of the first carbon-based material towards the interior of the particles, L being a short-axis length of the particles of the first carbon-based material; wherein the total pore area of the external region is denoted as S₁, the total pore area of the internal region is denoted as S₂, and S₂ > S₁.

Under the condition that the first carbon-based material further satisfies S₂ > S₁, the first carbon-based material is further characterized by a high number of pores and/or a large pore size in the internal region and a low number of pores and/or a small pore size in the external region. The pore structure of the internal region of the first carbon-based material can reduce the rolling pressure on the negative electrode plate, effectively minimizing particle damage, and also can reserve the expansion space required for the change in the volume of the particles, thereby reducing the risk of the particles breaking up to generate a new interface, and thereby reducing the side reactions; the number of pores in the external region of the first carbon-based material is less and/or the pore size is smaller, thereby enabling the first carbon-based material particles to have a stable structure and to avoid, as far as possible, penetration of the electrolyte into the pore structure inside the first carbon-based material particles, thereby further minimizing the side reactions and reducing the consumption of active ions for SEI film formation inside the particles. Thus, under the condition that the first carbon-based material further satisfies S₂ > S₁, the first columbic efficiency of the secondary battery and the storage performance of the secondary battery can be further improved.

In some embodiments, 1.5 ≤S₂/S₁ ≤ 500, 2 ≤S₂/S₁ ≤ 450, 2.2 ≤S₂/S₁ ≤ 400, 2.4 ≤S₂/S₁ ≤ 300, 2.5 ≤S₂/S₁ ≤ 250, 2.6 ≤S₂/S₁ ≤ 200, 2.8 ≤S₂/S₁ ≤ 150, and 3.0 ≤S₂/S₁ ≤ 100. The inventors have found in further research that under the condition that S₂/S₁ of the first carbon material falls within the above ranges, the secondary battery can be made to better balance high energy density as well as good storage performance.

In the present application, the total pore area S₁ of the external region and the total pore area S₂ of the internal region of the first carbon-based material can be obtained by testing a cross-sectional image of the first carbon-based material.

In the present application, the cross-sectional image of the first carbon-based material includes a cross-sectional image passing through a particle center of the first carbon-based material. "Particle center" means an area within a radius extending 0.1 µm from a geometric center of the particle toward the surface of the particle.

In the present application, the short axis length of the particle is the minimum value when a line connecting two points on the surface of the particle passes through the geometric center of the particle.

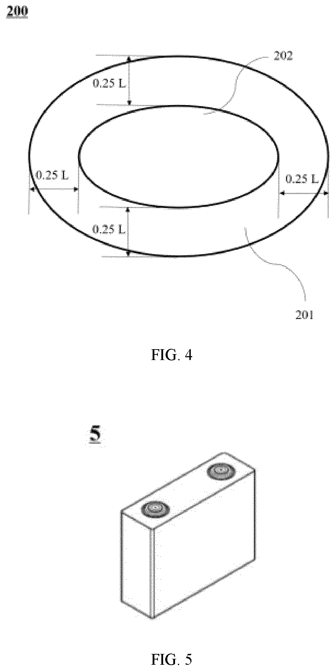

FIG. 4 is a schematic diagram of a cross-sectional image of a particle of the first carbon-based material 200 of the present application, and the cross-sectional image passes through the particle center of the first carbon-based material 200. As shown in FIG. 4, L denotes a short-axis length of a particle of the first carbon-based material 200, and a region covering a distance of 0.25 L extending from the surface of the particle of the first carbon-based material 200 toward the interior of the particle is the external region 201, and the region inside the external region 201 is the interior region 202.

A cross-section of the first carbon-based material can be prepared using a cross section polisher (e.g., an argon ion Cross Section Polisher IB-09010 CP from JEOL Company, Japan); the cross-section of the first carbon-based material is then scanned using a scanning electron microscope (e.g., a Sigma 300 scanning electron microscope from ZEISS Company, Germany) according to JY/T010-1996; and the cross-section of the first carbon-based material is finally processed by an image processing software (e.g., AVIZO) to calculate the total pore area S₁ of the external region and the total pore area S₂ of the internal region of the first carbon-based material.

In some embodiments, the short axis length L of the particles of the first carbon-based material satisfies L ≥ 6 µm, and optionally 6 µm ≤ L ≤ 25µm, 6µm ≤ L ≤ 20µm, 7 µm ≤ L≤ 20 µm, 8 µm ≤ L ≤ 20 µm, 8 µm ≤ L ≤ 18 µm, and 8 µm ≤ L ≤ 16 µm.

In some embodiments, the pore structure in the external region of the first carbon-based material has an area of less than or equal to 0.15 µm², optionally less than or equal to 0.10 µm². The inventors found in further research that by controlling the area of the pore structure in the external region of the first carbon-based material within the above ranges, the external region of the first carbon-based material can be made to have a dense structure, whereby the structural stability of the first carbon-based material can be effectively improved to avoid as much as possible the penetration of the electrolytic solution into the pore structure inside the particles of the first carbon-based material, which can reduce the side reactions and further effectively improve the cycling performance of the secondary battery. Of course, the present application does not intend to limit that all of the pore structures in the external region of the first carbon-based material have an area of less than or equal to 0.15 µm², for example, it can be controlled that 95% or above, optionally 99% or above, of the pore structures have an area of less than or equal to 0.15 µm², and optionally less than or equal to 0.1 µm².

In some embodiments, the pore structure in the internal region of the first carbon-based material comprises at least one pore structure having an area greater than or equal to 0.15 µm², optionally at least one pore structure having an area of from 0.15 µm² to 2.0 µm². The inventors found in further research that by making the internal region of the first carbon-based material comprise a pore structure with the above size, on one hand, the rolling pressure on the negative electrode plate can be effectively reduced to effectively minimize particle damage, and a sufficient and stable expansion space can be reserved for the volume change of the first carbon-based material particles, reducing the risk of breakup of the first carbon-based material particles, and on the other hand, the compaction density of the negative electrode film and further the energy density of the secondary battery can be improved.

In some embodiments, the first carbon-based material includes primary particles. Optionally, the quantity proportion of the primary particles in the first carbon-based material is greater than or equal to 50%, for example, 50%-100%, 55%-95%, 60%-100%, 65%-90%, 65%-80%, 70%-100%, 75%-90%, 80%-100%, 90%-100%, or 95% to 100%. The first carbon-based material contains an appropriate proportion of primary particles, and thus has high structural stability and reduced side reactions; accordingly, the storage performance of the secondary battery can be improved. Moreover, the compaction density of the negative electrode film can be increased, and thus the energy density of the secondary battery can be improved.

In the present application, the quantity proportion of the primary particles in the first carbon-based material is determined as follows: a test sample is taken from the negative electrode film layer, and multiple test areas are taken from the test sample; the images of the multiple test areas are obtained by scanning electron microscopy; and the quantity proportion of the first carbon-based materials having a morphology of primary particles in each image to the total number of particles of the first carbon-based materials is calculated, and the average of the multiple statistical results is the quantity proportion of the primary particles in the first carbon-based material.

In some embodiments, all of the first carbon-based material may be primary particles, that is, the quantity proportion of the primary particles in the first carbon-based material accounts for 100%.

In some embodiments, the first carbon-based material satisfies 0.152 ≤I_{D}/I_{G} ≤ 0.280, and optionally, 0.152 ≤ I_{D}/I_{G} ≤ 0.260, 0.153 ≤ I_{D}/I_{G} ≤ 0.240, 0.155 ≤ I_{D}/I_{G} ≤ 0.220, 0.155 ≤ I_{D}/I_{G} ≤ 0.200, and 0.155 ≤ I_{D}/I_{G} ≤ 0.180, in which I_{D} represents the D-peak intensity at 1350 ± 50cm⁻¹ of its Raman spectrum, and I_{G} represents the G peak intensity at 1580 ± 50cm⁻¹ of its Raman spectrum. Under the condition that the I_{D}/I_{G} of the first carbon-based material falls within the above ranges, the first carbon-based material can have less disordered carbon, and thus have higher specific capacity and higher chemical stability, thereby reducing the side reactions; accordingly, the energy density and storage performance of the secondary battery can be improved.

In some embodiments, the X-ray diffraction pattern of the first carbon-based material has a diffraction peak of 101 crystal plane of the 3R phase.

In some embodiments, the X-ray diffraction pattern of the first carbon-based material does not have a diffraction peak of 012 crystal plane of the 3R phase.

3R (Rhombohedral) phase refers to the rhombohedral crystalline carbon having the stacked structure of ABCABC . . . . In the X-ray diffraction pattern, the diffraction peak of the 101 crystal plane of the 3R phase corresponds to a 20 in the range of 43°-44°and the diffraction peak of the 012 crystal plane of the 3R phase corresponds to a 20 in the range of 46°-47°.

When the first carbon-based material has the diffraction peak of 101 crystal plane of the 3R phase, there are more active sites on the surface of the first carbon-based material, which is conducive to the rapid intercalation and deintercalation of active ions.

When the first carbon-based material does not have a diffraction peak of the 012 crystal plane of the 3R phase, the particles of the first carbon-based material have fewer internal defects; accordingly, side reactions can be further reduced and irreversible consumption of active ions can be reduced. As a result, the initial columbic efficiency and storage performance of the secondary battery can be improved.

The inventors have further found that under the condition that the first carbon-based material further satisfies one or more of the following conditions in addition to satisfying the design requirements described above, it can further improve the performance of the secondary battery, so as to enhance at least one of the energy density, dynamic performance, storage performance, and cycling performance of the secondary battery.

In some embodiments, the first carbon-based material has a specific surface area of 1.0 m²/g to 2.1 m²/g, and optionally from 1.1 m²/g to 2.0 m²/g or from 1.15 m²/g to 1.8 m²/g. The first carbon-based material has a lower specific surface area, thus the consumption of active ions for the SEI membrane formation can be reduced, and the initial columbic efficiency and storage performance of the secondary battery can be improved.

In some embodiments, the first carbon-based material has a volume average particle size Dv50 of 8.0 µm to 25.0µm, and optionally from 8.0 µm to 22.0 µm.

In some embodiments, the first carbon-based material has a volume average particle size Dv90 of 16.0 µm to 45.0µm, and optionally from 16.5 µm to 42.0 µm.

Under the condition that the volume average particle size Dv50 and/or Dv90 of the first carbon-based material falls within the above ranges, it is conducive to improving the transport performance of active ions and electrons, which can further improve the dynamic performance of the secondary battery; in addition, the specific surface area of the first carbon-based material can be further reduced, and the side reactions can be reduced, so the storage performance of the secondary battery can be improved.

In some embodiments, the first carbon-based material has a particle size distribution (Dv90-Dv10)/Dv50 of ≤ 1.55, and optionally from 0.90 to 1.50. Under the condition that the particle size distribution (Dv90-Dv10)/Dv50 of the first carbon-based material falls within the above ranges, the first carbon-based material has a better particle accumulating performance, which is conducive to improving the compaction density of the negative electrode film and thus improving the energy density of the secondary battery; furthermore, it is conducive to adjusting the pore distribution in the negative electrode film, which may improve the dynamic performance of the secondary battery.

In some embodiments, the first carbon-based material has a powder compaction density under a pressure of 20000N of 1.65g/cm³ to 2.0g/cm³, and optionally from 1.68g/cm³ to 1.98g/cm³. Under the condition that the powder compaction density of the first carbon-based material falls within the above ranges, the compaction density of the negative electrode film and thus the energy density of the secondary battery can be improved; moreover, it is conducive to the formation of a suitable pore structure among the particles of the negative electrode film, so as to improve the transport performance of active ions and the electrons, and further improve the dynamic performance of the secondary battery.

In some embodiments, the first carbon-based material has a tap density of from 0.85 g/cm³ to 1.30 g/cm³, and optionally from 0.90 g/cm³ to 1.25 g/cm³. Under the condition that the tap density of the first carbon-based material falls within the above ranges, the compaction density of the negative electrode film and thus the energy density of the secondary battery can be improved; moreover, it is conducive to the formation of a suitable pore structure among the particles of the negative electrode film, so as to improve the transport performance of active ions and electrons, and further improve the dynamic performance of the secondary battery.

In some embodiments, the specific capacity of the first carbon-based material is ≥355mAh/g, and optionally from 355 mAh/G to 370mah /g. Under the condition that the specific capacity of the first carbon-based material falls within the above ranges, it is conducive to improving the energy density of the secondary battery.

In some embodiments, the first carbon-based material has a graphitization degree of ≥ 95.5%, and optionally from 95.5% to 98%. Under the condition that the graphitization degree of the first carbon-based material falls within the above ranges, it is conducive to improving the energy density of the secondary battery.

In some embodiments, the first carbon-based material has a weight loss rate of ≤ 52%, optionally 8%-48%, 8%-45%, or 10%-42% in a thermogravimetric analysis test under an air atmosphere and temperature rise from 35°C to 790°C. Under such circumstances, the first carbon-based material can have fewer surface defects and/or bulk phase defects. Accordingly, the consumption of active ions during the storage process of the secondary battery is reduced, and further the storage performance of the secondary battery is improved.

In some embodiments, the first carbon-based material has a maximum weight loss rate of ≤ 5.0%/min, optionally ≤ 4.8%/min, or ≤ 4.5%/min in a thermogravimetric analysis test under an air atmosphere. Under such circumstances, the first carbon-based material can have fewer surface defects and/or bulk phase defects. Accordingly, the consumption of active ions during the storage process of the secondary battery is reduced, and further the storage performance of the secondary battery is improved.

The thermogravimetric analysis of the first carbon-based material can be performed according to JY/T 014-1996. In the present application, it can be carried out under the following conditions: the sample mass is 10±0.05mg, the purge gas is air and the airflow rate is 60 mL/min, the heating rate is 5°C/min, and the test temperature range is from 35°C to 950°C. The test instrument may be NETZSCH STA 449F3 synchronous thermal analyzer from NETZSCH INSTRUMENTS, Germany.

In some embodiments, the first active material further includes a third carbon-based material including an artificial graphite having a morphology of primary particles. By combining the first carbon-based material and the third carbon-based material, it is conducive to the suitable pore structure of the negative electrode film, and is conducive to in the improvement of the active ion transport performance of the negative electrode film.

In some embodiments, the surface of the artificial graphite having the morphology of primary particles does not have a carbon coating layer. The artificial graphite having the morphology of primary particles has a relatively stable surface, when its surface does not have a carbon coating layer, it is conducive to maintaining the low side reaction activity thereof, thereby reducing side reactions, and as a result, the cycle performance and storage performance of the secondary battery can be improved.

In some embodiments, the mass proportion of the third carbon-based material in the first active material is less than or equal to 70wt%, and optionally 15wt%-70wt%, 25wt%-70wt%, 35wt%-70wt%, 40wt%-70wt%, 15wt%-60wt%, 20wt%-60wt%, 30wt%-60wt%, or 40wt%-60wt%.

The inventors have further found that under the condition that the third carbon-based material satisfies one or more of the following conditions in addition to satisfying the above design requirements, the performance of the secondary battery, such as the energy density, storage performance, dynamic performance and cycle performance of the secondary battery, can be further improved.

In some embodiments, the graphitization degree of the third carbon-based material is from 92.5 and 95.5%, and optionally from 92.7 to 95.5%. Under the condition that the graphitization degree of the third carbon-based material falls within the above ranges, it is conducive to improving the negative electrode film, especially the active ion transport performance of the first region. Accordingly, the secondary battery can have high energy density and also have good dynamic performance.

In some embodiments, the powder OI value of the third carbon-based material is from 4.5 to 11.5, and optionally from 4.5 to 11.0. Since the powder OI value of the third carbon-based material is small, the particles have accesses for intercalating active ions in all directions, which is conducive to receiving active ions from the positive electrode quickly, and further improving the dynamic performance of the secondary battery. In addition, under such circumstance, the homogeneity of the third carbon-based material particles is higher, thus it is conducive to the expansion rate due to the intercalating of the dispersed active ions, and thereby reducing the thickness expansion rate of the negative electrode film; accordingly, the cycle performance and storage performance of the secondary battery can be further improved.

In some embodiments, the particle size distribution (Dv90-Dv10)/Dv50 of the third carbon-based material is ≤ 1.65, optionally from 0.90 to1.65. Under the condition that the particle size distribution of the third carbon-based material (Dv90-Dv10)/Dv50 falls within the above ranges, since the particle accumulating performance is better, it is conducive to improving the compaction density of the negative electrode film layer, and further improving the energy density of the secondary battery. In addition, it is conducive to adjusting the pore distribution of the negative electrode film layer and thus improving the dynamic performance of the secondary battery.

In some embodiments, the volume average particle size Dv50 of the third carbon-based material is from 12.0 µm to 22.0 µm, and optionally from 13.5 µm to 20.0 µm. Under the condition that the volume average particle size Dv50 of the third carbon-based material falls within the above ranges, it is conducive to improving the transport performance of active ions and electrons, and thus improving the dynamic performance of the secondary battery. In addition, it is conducive to reducing the specific surface area of the third carbon-based material and thus reducing side reactions; accordingly, the storage performance of the secondary battery can be improved.

In some embodiments, the specific surface area of the third carbon-based material is from 1.0 m²/g to 2.0 m²/g, and optionally from 1.05 m²/g to 1.95 m²/g. Since the third carbon-based material has a relatively low specific surface area, the consumption of active ions in SEI film formation and thus side reactions are reduced. Accordingly, the initial columbic efficiency and storage performance of the secondary battery are improved.

In some embodiments, the tap density of the third carbon-based material is from 0.95 g/cm³ to 1.25 g/cm³, and optionally 1.00 g/cm³ to 1.25 g/cm³. Under the condition that the tap density of the third carbon-based material falls within the above ranges, the compaction density of the negative electrode film and thus the energy density of the secondary battery can be increased. Moreover, it is conducive to forming a suitable pore structure among the particles of the negative electrode film layer, thereby improving the transport performance of active ions and electrons, and thus improving the dynamic performance of the secondary battery.

In some embodiments, the specific capacity of the third carbon-based material is from 350 mAh/G to 363 mAh/G, and optionally from 352 mAh/G to 362 mAh/g. Under the condition that the specific capacity of the third carbon-based material falls within the above ranges, on one hand, the energy density of the secondary battery can be improved, and on the other hand, the active ion transport performance of the negative electrode film can be improved, and thus the dynamic performance of the secondary battery can be improved.

As shown in FIGS. 1 to 3, the negative electrode film 102 further comprises an intermediate region 1023 located between the first region 1021 of the negative electrode film and the second region 1022 of the negative electrode film and having a thickness of 0.4 H (H denotes the thickness of the negative electrode film 102).

In some embodiments, the intermediate region comprises the first active material and/or the second active material. For example, as shown in FIG. 2, the intermediate region 1023 may be compositionally identical to the first region 1021, whereby the first active material is distributed in the thickness direction of the negative electrode film 102 over a thickness ranging from the second surface 102b of the negative electrode film to 0.7 H. Alternatively, as shown in FIG. 3, the intermediate region 1023 may be compositionally identical to the second region 1022, whereby the second active material is distributed in the thickness direction of the negative electrode film 102 over a thickness ranging from the first surface 102a to 0.7 H of the negative electrode film; or, as shown in FIG. 1, the intermediate region 1023 comprises both the first active material and the second active material, whereby the intermediate region 1023 comprises both a layer structure having the first active material and a layer structure having the second active material, and the two-layer structure may further have a layer interface.

In some embodiments, the first region of the negative electrode film may further comprise other negative electrode active materials known in the art, in addition to the first carbon-based material and the third carbon-based material. For example, a silicon-based material may be further included, and the silicon-based material can play a role in improving the pore structure in the negative electrode film, facilitating the wettability and retention of the electrolyte, and enhancing the dynamic performance of the secondary battery; and at the same time, it can also enhance the capacity of the negative electrode, so as to further enhance the energy density of the secondary battery. Optionally, the silicon-based material may comprise one or more of a monolithic silicon, a silicon oxide, a silicon carbon complex, a silicon nitrogen complex, and a silicon alloy material.

In some embodiments, when the first region of the negative electrode film further comprises a silicon-based material, the silicon-based material is present in the first region of the negative electrode film in a mass proportion of ≤ 10%, for example, 1%-8%, 2%-6%, or 3%-7%. Under such circumstances, it is possible to improve the dynamic performance and energy density of the secondary battery while making the secondary battery have good cycling performance and also have storage performance.

In some embodiments, the second region of the negative electrode film may further comprise other negative electrode active materials known in the art, in addition to the second carbon-based material. For example, a silicon-based material may be further included, and the silicon-based material can play a role in improving the pore structure in the negative electrode film, facilitating the wettability and retention of the electrolyte, and enhancing the dynamic performance of the secondary battery; and at the same time, it can also enhance the capacity of the negative electrode, so as to further enhance the energy density of the secondary battery. Optionally, the silicon-based material may comprise one or more of a monolithic silicon, a silicon oxide, a silicon carbon complex, a silicon nitrogen complex, and a silicon alloy material.

In some embodiments, when the second region of the negative electrode film further comprises a silicon-based material, the silicon-based material is present in the second region of the negative electrode film in a mass proportion of ≤ 10%, for example, 1%-8%, 2%-6%, or 3%-7%. Thereby it is possible to improve the dynamic performance and energy density of the secondary battery while making the secondary battery have good cycling performance and also have storage performance.

In some embodiments, both the first region and the second region comprise a silicon-based material, and a mass proportion of the silicon-based material in the first region is less than or equal to that of the silicon-based material in the second region. During the charging and discharging process of the secondary battery, the volume expansion of the silicon-based material is greater than that of the carbon-based material, thereby favoring a higher porosity of the second region of the negative electrode film, thereby favoring the enhancement of the wettability of the negative electrode film to the electrolyte, the enhancement of the transport performance of active ions, and the enhancement of the cycling performance and/or the dynamic performance of the secondary battery. In addition, due to the higher porosity of the second region of the negative electrode film, the active ion transport performance of the first region of the negative electrode film can also be enhanced.

In some embodiments, the intermediate region of the negative electrode film further comprises a silicon-based material.

In some embodiments, the first region, the second region, and the intermediate region of the negative electrode film further optionally comprise a negative electrode conductive agent and/or a negative electrode binder.

There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers.

There is no particular limitation on the type of the negative electrode binder in the present application. As an example, the negative electrode binder may comprise one or more of styrene butadiene rubber (SBR), water-soluble unsaturated resin SR-1B, water-based acrylic resin (such as polyacrylic acid PAA, polymethacrylic acid PMAA, and polyacrylic acid sodium PAAS), polyacrylamide (PAM), polyvinyl alcohol (PVA), sodium alginate (SA), and carboxymethyl chitosan (CMCS).

In some embodiments, the first region, the second region, and the intermediate region of the negative electrode film may further optionally comprise other auxiliaries. As an example, the other auxiliaries may comprise a thickener, such as carboxymethyl cellulose sodium (CMC-Na) or a PTC thermistor material.

In some embodiments, the negative electrode film has a porosity of 18.0% to 36.7%, and optionally from 19.0% to 34.0%. This facilitates the negative electrode film to have high capacity and a suitable pore structure, which in turn facilitates the secondary battery to have high energy density and good storage performance and dynamic performance.

In some embodiments, the negative electrode film has a compaction density of 1.45 g/cm³ to 1.90g/cm³, and optionally from 1.50 g/cm³ to 1.85 g/cm³. Under such circumstances, it is conducive to the high capacity of the negative electrode film and high transport performance of active ions and electrons. Accordingly, the secondary battery can have high energy density and also have good storage performance and dynamic performance.

In some embodiments, the negative electrode film has an areal density of 5.0g/cm² to 25.0g/cm², and optionally from 5.5g/ cm² to 22.5g/cm². Under such circumstances, it is favorable for the negative electrode film to have high capacity, high active ion and electron transport performance, and thus is favorable for the secondary battery to have high energy density and also have good storage performance and dynamic performance.

In some embodiments, the negative electrode film has an OI value of ≤ 35.0, and optionally from 8.0 to 35.0. Under such circumstances, it is conducive to improving the active ion intercalating performance of the negative electrode film, and thus rendering the negative electrode film a low thickness rebound rate. Accordingly, the secondary battery have good cycling performance and also good dynamic performance.

In some embodiments, the thickness of the negative electrode film layer is from 70 µm to 250 µm, and optionally from 90 µm to 220 µm.

In some embodiments, the negative electrode current collector may be a metal foil or a composite current collector. As an example of the metal foil, a copper foil or a copper alloy foil may be used. The composite current collector may include a polymeric material base layer and a metal material layer formed on at least one surface of the polymeric material base layer. As an example, the metal material may comprise one or more of copper, copper alloy, nickel, nickel alloy, titanium, titanium alloy, silver, and silver alloy, and the polymeric material base layer may include one or more of polypropylene (PP), polyethylene terephthalate (PET), polybutylene terephthalate (PBT), polystyrene (PS), and polyethylene (PE).

The negative electrode plate of the present application does not exclude additional functional layers other than the negative electrode film. For example, in some embodiments, the negative electrode plate described in the present application further comprises a conductive primer (e.g. being composed of a conductive agent and a binder) sandwiched between the negative electrode current collector and the negative electrode film and located on the surface of the negative electrode current collector. In some other embodiments, the negative electrode plate described in the present application further comprises a protective layer covering the surface of the negative electrode film.

The negative electrode current collector has two surfaces opposite to each other in the direction of its own thickness, and the negative electrode film is provided on either or both of the two opposite surfaces of the negative electrode current collector. It should be noted that each parameter of negative electrode film (e.g., compaction density, surface density, porosity, OI value etc.) given in the present application refers to a parameter of the negative electrode film on a single side of the negative electrode current collector. When the negative electrode film is provided on both sides of the negative electrode current collector, and the parameters of the negative electrode film on any one of the sides satisfy the present application, it should be considered to fall within the scope of protection of the present application.

In the present application, the presence or absence of a carbon coating layer on a surface of a material (e.g., a first carbon-based material, a second carbon-based material, a third carbon-based material, etc.) can be determined by transmission electron microscopy.

In the present application, the specific surface area of a material (e.g., a first carbon-based material, a second carbon-based material, a third carbon-based material, etc.) has a meaning known in the art, and can be measured by instruments and methods known in the art. For example, the specific surface area may be tested by a nitrogen adsorption specific surface area analysis test method according to GB/T 19587-2017, and calculated by a BET (Brunauer Emmett Teller) method. The nitrogen adsorption specific surface area analysis test may be performed by a Tri-Star 3020 specific surface area pore size analysis tester from Micromeritics, USA.

In the present application, the graphitization degree of a material (e.g., a first carbon-based material, a second carbon-based material, a third carbon-based material, etc.) has the meaning known in the art, and can be tested by instruments and methods known in the art. For example, the graphitization degree may be tested as follows: using an X-ray diffractometer (such as Bruker D8 Discover) according to JIS K 0131-1996 and JB/T 4220-2011 to obtain an average interlayer spacing d₀₀₂ of C(002) crystal plane in the crystalline structure of the material, and then calculating according to a formula, g = (0.344 - d₀₀₂)/(0.344 - 0.3354)×100%. In the above formula, d₀₀₂ is an average interlayer spacing between (002) crystal planes in the crystal structure of the material, expressed in nanometers (nm).

In the present application, the volume average particle sizes Dv10, Dv50, and Dv90 of a material (e.g., the first carbon-based material, the second carbon-based material, the third carbon-based material, etc.) have the meanings known in the art, which indicate the particle sizes corresponding to when the cumulative volume distribution percentage of the material reaches 10%, 50%, and 90%, respectively, and can be measured by instruments and methods known in the art. For example, they can be determined using a laser particle size analyzer according to GB/T 19077-2016. The testing instrument may be a Mastersizer 3000 laser particle size analyzer from Malvern Instruments Ltd., United Kingdom.

In the present application, the powder compaction density of a material (e.g., the first carbon-based material, the second carbon-based material, the third carbon-based material, etc.) has a meaning that is well known in the art, and can be tested by instruments and methods known in the art. For example, it can be tested by an electronic pressure tester (e.g., type UTM7305) according to standard GB/T 24533-2009. The exemplary test method is as follows: weighing 1 g of material, adding it to a mold with a bottom area of 1.327 cm², pressurizing it to 2000 kg, holding the pressure for 30 s, and then releasing the pressure and holding it for 10 s, and then recording and calculating to obtain the powder compaction density of the material under a pressure of 20000N.

In the present application, the tap density of a material (e.g., the first carbon-based material, the second carbon-based material, the third carbon-based material, etc.) has a meaning that is well known in the art, and can be determined using instruments and methods known in the art. For example, it can be determined using a powder tap density tester with reference to GB/T 5162-2006. The test instrument may be Dandong Baxter BT-301 with the following test parameters: vibration frequency, 250±15 times/minute; amplitude, 3±0.2 mm; number of vibrations, 5000 times; and measuring cylinder, 25 mL.

In the present application, I_{D}/I_{G} of the first carbon-based material may be tested using a Raman spectrometer, wherein I_{D} represents the D peak intensity of the material at 1350±50cm⁻¹ of its Raman spectrum, and I_{G} represents the G peak intensity of the material at 1580±50cm⁻¹ of its Raman spectrum. The test conditions are as follows: excitation wavelength, 532nm; the grating, 600 lines; the objective lens, 50 times; the integration time, 10s; the cumulative numbers, 3 times; and surface scan to obtain the D peak and G peak intensities of 100 points. The I_{D}/I_{G} of 100 points are calculated, in which the 30 highest I_{D} /I_{G} and the 30 lowest I_{D} /I_{G} are discarded and the average value of the remaining 40 points is recorded as the I_{D}/I_{G} of the material. The test instrument may be Horiba LabRAM HR800 Raman spectrometer.

In the present application, the powder OI value of a material (e.g., the second carbon-based material, the third carbon-based material, etc.) has a meaning known in the art and can be tested by methods known in the art. For example, an X-ray diffractometer (e.g., a Bruker D8 Discover) may be used to conduct the test, and the test may be conducted according to JIS K 0131-1996 and JB/T 4220-2011, to give the X-ray diffraction pattern of the powder sample, and the powder OI value of the sample may be calculated according to OI value = I₀₀₄/I₁₁₀, with I₀₀₄ being the integral area of the diffraction peak of the (004) crystal plane of crystalline carbon in the powder sample, and I₁₁₀ being the integral area of the diffraction peak of the (110) crystal plane of crystalline carbon in the powder sample. In the X-ray diffraction analysis test of the present application, a copper target may be used as the anode target, and CuKα rays are used as the radiation source, with a ray wavelength λ=1.5418 Å, a scanning 2θ angle ranging from 20° to 80°, and a scanning rate of 4°/min.

In the present application, both primary particles and secondary particles have meanings well known in the art. Primary particles are particles in a non-agglomerated state. Secondary particles are particles in an agglomerated state formed by the aggregation of two or more than two primary particles. Primary particles and secondary particles can be distinguished by using scanning electron microscope (SEM) images.

In the present application, the specific capacity of a material (e.g., the first carbon-based material, the second carbon-based material, the third carbon-based material, etc.) has a meaning well known in the art, and may be tested using methods known in the art. An exemplary test method is as follows: a slurry is made by mixing a powder sample with the conductive agent carbon black (Super P), the binder polyvinylidene fluoride (PVDF) at a mass ratio of 91.6:1.8:6.6 in the solvent N-methylpyrrolidone (NMP); the prepared slurry is applied on the surface of the negative electrode current collector copper foil, dried in an oven, and then set aside for use; ethylene carbonate (EC), methyl ethyl carbonate (EMC), diethyl carbonate (DEC) are mixed at a volume ratio of 1:1:1 to give an organic solvent, and then LiPF₆ is dissolved in the above organic solvent, and prepared into an electrolyte with a concentration of 1 mol/L; and then a lithium metal sheet as the counter electrode, a polyethylene (PE) film as the separator, and the electrolyte are assembled in an argon protected glove box into CR2430-type button battery; then the obtained button battery is left to stand for 12h, afterwards, it is discharged to 0.005V at a constant current of 0.05C at 25°C and is allowed to stand for 10 minutes, then is discharged to 0.005V at a constant current of 50 µA and is allowed to stand for 10 minutes, and is discharged to 0.005V at a constant current of 10 µA and is allowed to stand for 10 minutes, and then is charged to 2V at a constant current of 0.1C; the charging capacity is recorded. The ratio of the charging capacity to the sample mass is the specific capacity of the corresponding material (e.g., the first carbon-based material, the second carbon-based material, the third carbon-based material, etc.).

In the present application, the areal density of the negative electrode film has a meaning known in the art, and can be measured by instruments and methods known in the art. An exemplary testing method is as follows: cutting a single-sided coated and cold-pressed negative electrode plate (for a double-sided coated negative electrode plate, a coating layer on one side can be wiped off first) into a small round plate with an area of S₁, weighing it and recording the weight as M₁; and then wiping off the coating layer of the weighed negative electrode plate, weighing the negative electrode current collector and recording the weight as M₀. The areal density of the negative electrode plate is (M₁ - M₀)/S₁.

In the present application, the compaction density of the negative electrode film has a meaning known in the art and can be tested by methods known in the art. The compaction density of the negative electrode film = the areal density of the negative electrode film /the thickness of the negative electrode film. The thickness of the negative electrode film has the meaning known in the art, and can be tested by methods known in the art, such as by using a micrometer (e.g., Mitutoyo 293-100 with an accuracy of 0.1 µm).

In the present application, the porosity of the negative electrode film has a meaning known in the art and can be tested by methods known in the art. An exemplary test method is as follows: taking a single-sided coated and cold-pressed negative electrode plate (for a double-sided coated negative electrode plate, a coating layer on one side can be wiped off first), punching and cutting it into a small circular sample of a certain area, calculating the apparent volume V₁ of the negative electrode plate; with reference to GB/T24586-2009, using an inert gas (such as helium or nitrogen) as the medium, adopting the gas replacement method, and measuring the true volume of the negative electrode plate V₂ by a true Density tester. Porosity of the negative electrode film = (V₁-V₂)/V₁×100%. Multiple samples (e.g., 30 slices) having good appearance and without powder off the edge of the negative electrode plate samples can be taken for testing, and the results are averaged, thus improving the accuracy of the test results. The testing instrument may be a Micromeritics AccuPyc II Model 1340 True Density Tester.

In the present application, the OI value of the negative electrode film has a meaning known in the art and can be tested by methods known in the art. For example, an X-ray diffractometer (e.g., a Bruker D8 Discover) may be used to conduct the test, and the test may be conducted with reference to JIS K 0131-1996 and JB/T 4220-2011, to give the X-ray diffraction pattern of the negative electrode plate, and the OI value of the negative electrode film may be calculated according to OI value = I₀₀₄/I₁₁₀, in which I₀₀₄ is the integral area of the diffraction peak of the (004) crystal plane of crystalline carbon in the negative electrode film, and I₁₁₀ is the integral area of the diffraction peak of the (110) crystal plane of crystalline carbon in the negative electrode film. In the X-ray diffraction analysis test of the present application, a copper target may be used as the anode target, and CuKα rays are used as the radiation source, with a ray wavelength λ=1.5418 Å, a scanning 20 angle ranging from 20°- 80°, and a scanning rate of 4°/min.

It should be noted that the various parameter tests described above for the first carbon-based material, the second carbon-based material or the negative electrode film layer can be performed by taking samples from a prepared secondary battery according to the following steps.

The secondary battery is discharged (for safety reasons, the secondary battery should generally be in a fully discharged state); the secondary battery is disassembled and the negative electrode plate is taken out, and the negative electrode plate is soaked for a certain period of time (e.g., 2h-10h) using dimethyl carbonate; the negative electrode plate is then taken out and dried at a certain temperature and time (e.g., at 60°C for 4h or above), and the negative electrode plate is taken out after drying. At this time, it is possible to take samples from the dried negative electrode plate to test the parameters related to the negative electrode film, such as the areal density, compaction density, porosity, OI value, etc. of the negative electrode film.

The dried negative electrode plate described above is baked at a certain temperature and time (e.g., 400°C for 2h or above), a region in the baked negative electrode plate is arbitrarily selected, and a sample of the second active material (optionally using a blade to scrap powder for sampling) is first taken, and the sampling location is the second region of the negative electrode film; and then the sample of the first active material is taken in the same way, and the sampling location is the first region of the negative electrode film; and the first active material and the second active material are sieved separately (e.g., sieving it through a 200-mesh sieve), and ultimately a sample of the first active material and a sample of the second active material that can be used to test the above parameters of the material are obtained.

### [Method for Preparing a Negative Electrode Plate]

The present application further provides a method for preparing the negative electrode plate of the present application. The method comprises the steps of providing a first slurry comprising a first active material and a second slurry comprising a second active material; applying the first slurry on the negative electrode current collector and applying the second slurry on the first slurry, and obtaining the negative electrode plate after drying and cold pressing.

In some embodiments, the first active material, as well as an optional conductive agent, an optional binder, and other optional additives, can be dispersed in a solvent (e.g., deionized water) to form the first slurry.

In some embodiments, the second active material, as well as an optional conductive agent, an optional binder, and other optional additives, can be dispersed in a solvent (e.g., deionized water) to form the second slurry.

In some embodiments, the first active material comprises a first carbon-based material or a mixture of a first carbon material and a third carbon-based material.

In some embodiments, the second active material comprises a second carbon-based material.

In some embodiments, the first slurry and/or the second slurry further comprises a silicon-based material.

The first slurry and the second slurry may be applied simultaneously in one pass or in two passes. In some embodiments, the first slurry and the second slurry are applied in one pass simultaneously. The one-pass simultaneous coating can reduce the negative electrode film's resistance, which can further improve the dynamic performance and cycling performance of the secondary battery.

The coating weights of the first slurry and the second slurry can be adjusted according to the actual situation.

In the present application, the first active material, the second active material and the like mentioned above can be obtained commercially, or can also be prepared by the methods described below in the present application.

In some embodiments, the method for preparing the first carbon-based material comprises: step 1, providing a raw material having a plurality of pore structures; step 2, mixing the raw material with a filling material according to a predetermined ratio, and thereafter holding the mixture at a first temperature T₁ for a first time t₁, and then cooling it to room temperature to obtain an intermediate; step 3, holding the obtained intermediate at a second temperature T₂ for a second time t₂, after which obtaining the first carbon-based material.

In some embodiments, in step 1, the raw material for preparing the first carbon-based material comprises natural graphite. Optionally, the natural graphite comprises one or more of flaky graphite, natural spherical graphite and microcrystalline graphite, more optionally comprises natural spherical graphite.

"Natural spherical graphite" refers to natural graphite having a spherical or spheroidal-like shape, and not all natural graphite particles have to be controlled to be ideally spherical. In some embodiments, the natural spherical graphite can be obtained by pre-treating a flaky graphite to obtain the desired particle size and morphology, optionally the pre-treatment comprising processes such as crushing, grading, spheroidization, purification, etc.

In some embodiments, in step 1, the graphitization degree of the raw material is ≥ 94.5%, which is conducive to regulating the graphitization degree of the first carbon-based material.

In some embodiments, in step 1, the raw material may have a volume average particle size Dv50 of 7.5 µm-25.0 µm, optionally 8.0 µm-24.5 µm, thereby facilitating the preparation of the first carbon-based material having the desired volume average particle size.

In some embodiments, in step 1, the specific surface area of the raw material may be ≥ 2.5 m²/g, optionally 2.5 m²/g-10.0 m²/g. Under the condition that the specific surface area of the raw material falls within the above ranges, it is favorable to carry out subsequent filling treatment and obtain the first carbon-based material with the desired specific surface area, and it is also favorable for the first carbon-based material to have a high capacity and a high initial columbic efficiency at the same time, and in addition, it is also favorable for the first carbon-based material to have better dynamic properties.

In some embodiments, in step 2, the softening point temperature of the filling material is 92°C - 160°C, and optionally, the softening point temperature of the filling material is 100°C -155°C, 100°C - 150°C, 100°C -140°C, 105°C -155°C, 105°C -150°C, 105°C -140°C, 115°C-150°C, or 115°C-140°C.

In some embodiments, in step 2, the coking value of the filling material is 15%-45%, and optionally 20%-34%. In the present application, the coking value of the filling material has a meaning known in the art and can be determined by instruments and methods known in the art. For example, it can be determined according to GB/T 8727-2008.

In some embodiments, in step 2, the volume average particle size Dv50 of the filler material is less than or equal to 6 µm, optionally 1 µm-6 µm, 1 µm-5 µm, 2 µm-5 µm, or 3 µm-5 µm. Under such circumstances, it facilitates filling of the filler material into the pore structure of the raw material after being subjected to heat and melting, and also facilitates the improvement of the dispersion uniformity of the filling material and the raw material.

In some embodiments, in step 2, the filling material comprises one or more of coal asphalt, petroleum asphalt, polymer compounds and resins, optionally one or more of coal asphalt and petroleum asphalt.

In some embodiments, in step 2, the mass ratio of the filling material to the raw material is (10-40):100, optionally (10-30):100, (10-25):100, (10-20):100, (12-30):100, (12-20):100, (14-28):100, or (15-25):100.

In step 2, by adjusting one or more parameters of the type, the softening point, the coking value, the addition amount, and the like of the filling material within the above mentioned ranges, it is favorable to adjust the number of pores and/or the size of the pores in the external region and the internal region of the first carbon-based material within a suitable range, and it is favorable to adjust the S₂/S₁ of the first carbon-based material within a suitable range.

By adjusting the parameters such as the type, the softening point, the coking value, and the addition amount of the filling material within the above ranges, the filling material, after being heated and melted, does not have a high viscosity, maintains good fluidity, and at the same time is not easy to bond the raw material particles, which is capable of reducing the agglomeration of the raw material particles in the subsequent preparation process, and thereby also reduces the problems such as an increase in the defects on the surface of the particles of the first carbon-based material and an increase in the number of surface-active sites and the like due to the need for additional depolymerization processes.

In some embodiments, in step 2, the heating process in the step of mixing the raw material with the filling material in a predetermined proportion and then heating up to the first temperature T₁ may be a staged heating process.

In some embodiments, the staged heating process comprises a first heating process, a second heating process and a third heating process.

In some embodiments, the first heating process is heating to 200°C-250°C and holding at that temperature for 0.5h-3h.

In some embodiments, the second heating process is heating to 450°C-550°C and holding at that temperature for 0h-2h. When the holding time is 0h, it means that the heating to the range of 450°C-550°C is not held but continues to heat to the first temperature T₁.

In some embodiments, the third heating process is heating to the first temperature T₁ and holding at that temperature for a first time t₁.

In the staged heating process, the temperature is first raised to 200°C-250°C, and since the heating temperature is higher than the softening point of the filling material, the filling material is melted and softened by heating, and holding the temperature for 0.5h-3h can make it flow and fill the pore structure of the raw material; and after that, the temperature is raised to 450°C-550°C, whereby the melted and softened filling material undergoes a carbonization reaction, and gradually forms a semi-coke state, and changes into a viscous liquid or solid, thereby preventing the filling material from entering all of the pore structure of the raw material; and finally heating to a first temperature, whereby the filling material undergoes a carbonization reaction, thereby enabling the pore structure occupied by the filling material to be effectively filled.

In some embodiments, in step 2, the temperature is raised to the first temperature T₁ at a rate of 1°C/min-10°C/min. For example, the heating rate may be 1°C/min, 2°C/min, 3°C/min, 4°C/min, 5°C/min, 6°C/min, 7°C/min, 8°C/min, 9°C/min, 10°C/min, or in the range formed by any two of the values as mentioned above. Optionally, the heating rate is 1.5°C/min-8°C/min, 1.5°C/min-6°C/min, 2°C/min-6°C/min, or 2°C/min-5°C/min.

In some embodiments, the heating rate of the first heating process may be 1°C/min-10°C/min, and optionally 1.5°C/min-8°C/min, 1.5°C/min-6°C/min, 2°C/min-6°C/min, or 2°C/min-5°C/min.

In some embodiments, the heating rate of the second heating process may be 1°C/min-10°C/min, and optionally 2°C/min-8°C/min.

In some embodiments, the heating rate of the third heating process may be 1°C/min-10°C/min, and optionally 2°C/min-8°C/min.

In some embodiments, in step 2, the first temperature T₁ is 700°C-1200°C. For example the first temperature T₁ may be 700°C, 750°C, 800°C, 850°C, 900°C, 950°C, 1000°C, 1050°C, 1100°C, 1200°C, or in the range formed by any two of the values as mentioned above. Optionally, the first temperature T₁ is 750°C-1100°C, 800°C-1100°C, or 850°C-1000°C.

In some embodiments, in step 2, the first time t₁ is 1h-5h. For example, the first time t₁ may be 1h, 1.5h, 2h, 2.5h, 3h, 3.5h, 4h, 4.5h, 5h, or in the range formed by any two of the values as mentioned above. Optionally, the first time t₁ is 2h-4h.

In some embodiments, in step 2, the heating treatment may be carried out in equipment capable of programmed heating such as an intermediate frequency furnace, a roller kiln, a rotary kiln, a pusher kiln, a vertical granulating kettle, a horizontal granulating kettle, a vertical reactor, a horizontal reactor, or a drum furnace.

In some embodiments, in step 2, atmosphere for the heating treatment may be a protective gas atmosphere. The protective gas may include one or more of nitrogen, argon, or helium.

In step 2, by adjusting one or more of the heating rate, the first temperature, the first time, the heating process, etc., within the ranges described above, it is favorable to adjust the number of pores and/or the size of the pores in the external region and the internal region of the first carbon-based material within a suitable range, which in turn is favorable to adjust the S₂/S₁ of the first carbon-based material within a suitable range.

In some embodiments, in step 3, the second temperature T₂ is 1900°C -2650°C. Optionally, the second temperature T2 is 1960°C-2550°C, 1960°C-2500°C, 1960°C-2450°C, 1960°C-2400°C, 1960°C-2350°C, 2000°C-2550°C, 2000°C-2500°C, 2000°C-2450°C, 2000°C-2400°C, 2000°C-2350°C, 2080°C-2550°C, 2080°C-2500°C, 2080°C-2450°C, 2080°C-2400°C, or 2080°C-2350°C.

In some embodiments, in step 3, the second time t₂ is 1.5h-6h. For example, the second time t₁ may be 2h, 2.5h, 3h, 3.5h, 4h, 4.5h, 5h, 5.5h, 6h or in the range formed by any two of the values as mentioned above. Optionally, the second time t₂ is 2h-5h.

In some embodiments, in step 3, the heating treatment may be carried out in an intermediate frequency furnace, a chamber graphitization furnace, an Acheson graphitization furnace, a continuous graphitization furnace, or an inner string graphitization furnace.

In some embodiments, in step 3, atmosphere for the heating treatment in the medium frequency furnace or continuous graphitization furnace may be a protective gas atmosphere. The protective gas may include one or more of nitrogen, argon, and helium.

In step 3, by adjusting one or more of the second temperature, the second time within the above ranges, it is advantageous to adjust the content of disordered carbon in the first carbon-based material within a suitable range, and it is advantageous for the first carbon-based material to have a suitable I_{D}/I_{G} and/or suitable graphitization degree, and the like.

In the above-described preparation method of the first carbon-based material, by adjusting one or more of the parameters of the natural graphite, the parameters of the filling material, the heating rate, the first temperature, the first time, the heating process, the second temperature, the second time, and the like within the above-described ranges, the parameters of the first carbon-based material, such as S₂/S₁, I_{D}/I_{G}, graphitization degree, specific capacity, specific surface area, particle size, powder compaction density, tap density, and weight loss ratio, can be advantageously adjusted.

In some embodiments, the method for preparing the second carbon-based material includes Step 11, providing a raw material; Step 12: crushing the raw material and shaping it to obtain a first intermediate; Step 13, graphitizing the first intermediate to obtain a second intermediate; and Step 14, mixing the second intermediate with the an organic carbon source for carbonization treatment, and obtaining the second carbon-based material after sieving,.

In some embodiments, in step 11, the raw materials may include one or more of petroleum coke, needle coke, pitch coke, or metallurgical coke.

In some embodiments, in step 12, the raw materials may be crushed using a mechanical mill or a roller mill.

In some embodiments, in step 12, the shaping process may be performed using a shaping machine.

In some embodiments, in step 13, the graphitization temperature is from 2800°C to 3200°C.

By adjusting the graphitization temperature and/or graphitization time, the second carbon-based material may have suitable graphitization degree and/or I_{D}/I_{G}.

In some embodiments, in step 14, the organic carbon source may be carbon-containing materials known in the art and suitable for coating, for example, it may include one or more of coal pitch, petroleum pitch, phenolic resin, coconut husk, etc. The specific surface area, graphitization degree, specific capacity and I_{D}/I_{G} of the second carbon-based material can be adjusted by adjusting the amount of organic carbon source.

In some embodiments, in step 14, the carbonization temperature is from 900°C to 1300°C.

In step 14, the parameters, such as the specific surface area, graphitization degree, specific capacity, I_{D}/I_{G} and other parameters of the second carbon-based material, can be adjusted by adjusting the carbonization temperature and/or carbonization holding time.

In some embodiments, a granulation step may be included after step 12 and before step 13, so that the number proportion of secondary particles can be adjusted. For example, the first intermediate may be mixed with a binder for granulation. Optionally, the binder includes asphalt.

In the method for preparing the second carbon-based material, by adjusting one or more parameters selected from the parameters of the equipment (such as mechanical mill or roller mill, shaping machine, granulator, etc.), the parameters of the raw material, the amount of organic carbon source as added, the amount of binder as added, graphitization temperature, graphitization time, carbonization temperature, carbonization time, etc., the parameters of the second carbon-based material, such as I_{D}/I_{G}, graphitization degree, specific capacity, powder OI value, particle size, specific surface area, and tap density, can be advantageously adjusted.

### [Positive electrode plate]

In some embodiments, the positive electrode plate comprises a positive electrode current collector and a positive electrode film provided on at least one surface of the positive electrode current collector. For example, the positive electrode current collector has two surfaces opposite to each other in the direction of its own thickness, and the positive electrode film is provided on either or both of two opposite surfaces of the positive electrode current collector.

In some embodiments, the positive electrode current collector may be a metal foil or composite current collector. As an example of the metal foil, an aluminum foil may be used. The composite current collector may include a polymer material base layer and a metal material layer formed on at least one surface of the polymer material base layer. As an example, the metal material may include one or more selected from aluminum, aluminum alloy, nickel, nickel alloy, titanium, titanium alloy, silver, and silver alloy. As an example, the polymer material base layer may include one or more selected from polypropylene (PP), polyethylene terephthalate (PET), polybutylene terephthalate (PBT), polystyrene (PS), and polyethylene (PE).

In some embodiments, the positive electrode film may comprise a positive electrode active material, optional binder and optional conductive agent. The positive electrode film is usually formed by applying a positive electrode current collector with a positive electrode slurry, drying, and cold pressing. The positive electrode slurry is usually formed by dispersing a positive electrode active material, optional conductive agent, optional binder, and any other components in a solvent and stirring evenly. The solvent may be N-methylpyrrolidone (NMP), but is not limited thereto. As an example, the positive electrode binder may include one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. As an example, the positive electrode conductive agent may include one or more selected from superconducting carbon, conductive graphite, acetylene black, carbon black, Ketjen black, carbon dots, carbon nanotubes, graphene, and carbon nanofibers.

The positive electrode active material may be a positive electrode active material known in the art for use in secondary batteries.

When the secondary battery of the present application is a lithium-ion battery, the positive electrode active material may comprise at least one of a lithium transition metal oxide, a lithium-containing phosphate with an olivine structure, and their respective modified compounds. Examples of lithium transition metal oxides may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt aluminium oxide, and modified compounds thereof. Examples of lithium-containing phosphates with an olivine structure may include, but are not limited to, at least one of lithium iron phosphate, a composite of lithium iron phosphate and carbon, lithium manganese phosphate, a composite of lithium manganese phosphate and carbon, lithium ferromanganese phosphate, a composite of lithium ferromanganese phosphate and carbon, and their respective modified compounds.

In some embodiments, in order to further increase the energy density of the secondary battery, the positive electrode active material for the lithium-ion battery may include at least one of the lithium transition metal oxides with Formula LiₐNi_{b}Co_{c}M_{d}OₑA_{f} and the modified compounds thereof; in which Formula, 0.8 ≤ a ≤ 1.2, 0.5 ≤ b < 1, 0 < c < 1, 0 < d < 1, 1 ≤ e ≤ 2, 0 ≤ f ≤ 1, M is at least one selected from Mn, Al, Zr, Zn, Cu, Cr, Mg, Fe, V, Ti, or B, and A is at least one selected from N, F, S, or Cl.

In some embodiments, as an example, the positive electrode active material for a lithium-ion battery may include one or more of LiCoO₂, LiNiO₂, LiMnO₂, LiMn₂O₄, LiNi_{1/3}Co_{1/3}Mn_{1/3}O₂ (NCM333), LiNi_{0.5}O_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.85}Co_{0.15}Al_{0.05}O₂, LiFePO₄ and LiMnPO₄.

In the present application, the modified compounds of the foregoing positive electrode active materials may be those produced by doping modification and/or surface coating modification of the positive electrode active materials.

### [Electrolyte]

In some embodiments, the electrolyte is an electrolytic solution comprising a lithium salt and an organic solvent.

The type of the electrolyte salt is not specifically limited and may be selected according to actual needs.

When the secondary battery of the present application is a lithium-ion battery, as an example, the lithium salt may include one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate (LiDFOB), lithium bisoxalate (LiBOB), lithium difluorophosphate (LiPO₂F₂), lithium difluorobisoxalate phosphate (LiDFOP), and lithium tetrafluorooxalate phosphate (LiTFOP).

The type of the solvent is not specifically limited and may be selected according to actual needs. As an example, the organic solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butyl carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and ethylsulfonylethane (ESE).

In some embodiments, the electrolytic solution may further optionally include additives. For example, the additives may include a negative electrode film-forming additive, a positive electrode film-forming additive, and additives that can improve some performances of batteries, such as an additive that improves overcharge performance of batteries, an additive that improves high-temperature performance of secondary batteries, and an additive that improves low-temperature power performance of batteries.

### [Separator]

There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film. When the separator is a multi-layer composite thin film, materials of various layers may be the same or different.

In some embodiments, the positive electrode plate, the negative electrode plate, and the separator may be manufactured into an electrode assembly through a winding process or a stacking process.

In some embodiments, the secondary battery may include an outer package. The outer package may be used to encapsulate the electrode assembly and electrolyte.

In some embodiments, the outer package may be a hard case, such as a hard plastic case, an aluminum case, a steel case, and the like. The outer package may also be a soft package, such as a pouch-type soft package. A material of the soft bag may be plastic, such as at least one of polypropylene (PP), polybutylene terephthalate (PBT), and polybutylene succinate (PBS).

The shape of the secondary battery is not particularly limited in the present application, and it may be cylindrical, square, rectangular or any other shape. FIG. 5 is a schematic diagram of a secondary battery 5 of a rectangular structure as an example.

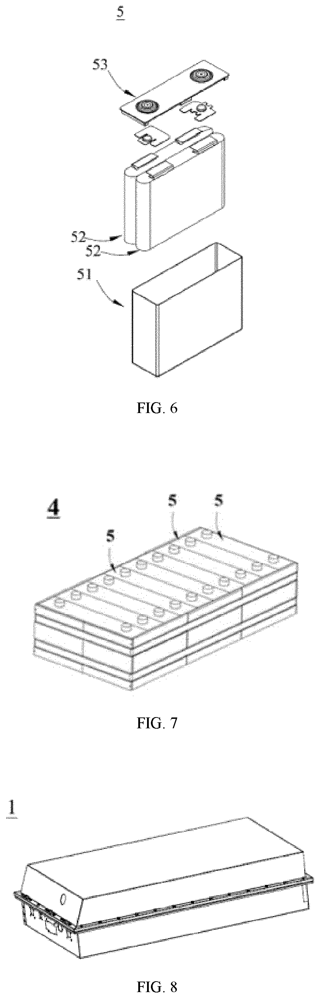

In some embodiments, as shown in FIG. 6, the outer package may include a casing 51 and a cover plate 53, wherein the casing 51 may include a bottom plate and side plates connected to the bottom plate, and the bottom plate and the side plates are enclosed to form an accommodating cavity. The casing 51 has an opening communicating with the accommodating cavity, and the cover plate 53 is used to cover the opening to close the accommodating cavity. A positive electrode plate, a separator, and a negative electrode plate may be made into an electrode assembly 52 by a winding process or a stacking process. The electrode assembly 52 is packaged in the accommodating cavity, and the electrolytic solution is infiltrated in the electrode assembly 52. The number of electrode assemblies 52 contained in the secondary battery 5 may be one or several, and may be adjusted according to requirements.

The method for preparing the secondary battery in the present application is well-known in the art. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or stacking process, the electrode assembly is placed in an outer package and dried, then the electrolytic solution is injected, followed by vacuum packaging, standing, formation, shaping, and other processes, thereby forming the secondary battery.

In some embodiments of the present application, the secondary batteries according to the present application can be assembled into a battery module, and the number of secondary batteries contained in the battery module can be more than one, and the specific number can be adjusted according to application and capacity of the battery module.

FIG. 7 is a schematic diagram of the battery module 4 as an example. As shown in FIG. 7, in the battery module 4, a plurality of secondary batteries 5 may be arranged in sequence along the longitudinal direction of the battery module 4. Certainly, they may also be arranged in any other manner. Furthermore, a plurality of secondary batteries 5 may be fixed with fasteners.

Optionally, the battery module 4 may further include a housing having an accommodating space in which a plurality of secondary batteries 5 are accommodated.

In some embodiments, the above-mentioned battery modules can also be assembled into a battery pack, and the number of battery modules included in the battery pack can be adjusted according to the application and capacity of the battery pack.

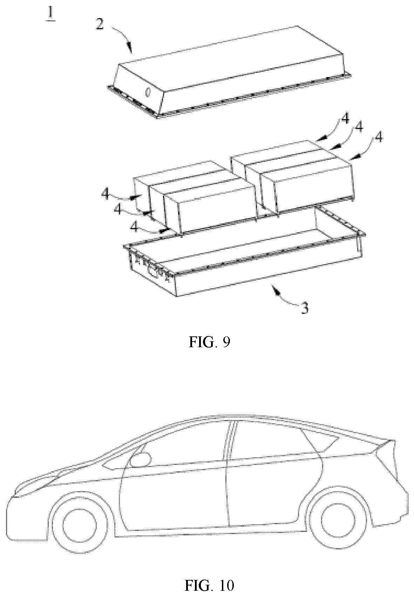

FIGS. 8 and 9 are schematic diagrams of the battery pack 1 as an example. As shown in FIGS. 8 and 9, the battery pack 1 may include a battery box and a plurality of battery modules 4 provided in the battery case. The battery box includes an upper case body 2 and a lower case body 3, and the upper case body 2 is used to cover the lower case body 3 to form a closed space for accommodating the battery modules 4. A plurality of battery modules 4 may be arranged in the battery box in any manner.

The present application further provides an electrical device comprising at least one of the secondary battery, battery module, and battery pack of the present application. The secondary battery, battery module or battery pack can be used as a power source of the electrical device, and can also be used as an energy storage unit of the electrical device. The electrical device can be, but is not limited to, a mobile device (e.g., a mobile phone, a notebook computer, and the like), an electric vehicle (e.g., a pure electric vehicle, a hybrid electric vehicle, a plug-in hybrid electric vehicle, an electric bicycle, an electric scooter, an electric golf vehicle, an electric truck and the like), an electric train, a ship, a satellite, an energy storage system, and the like.

The electrical device can contain a secondary battery, a battery module or a battery pack according to its usage requirements.

FIG. 10 is a schematic diagrams of an electrical device as an example. The electrical device is a pure electric vehicle, a hybrid electric vehicle, or a plug-in hybrid electric vehicle. In order to meet high power and high energy density requirements of the electrical device, a battery pack or a battery module can be used.

As another example, the electrical device may be a mobile phone, a tablet computer, a notebook computer, and the like. The electric device is generally required to be light and thin, and a secondary battery can be used as a power source.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

In the following examples and comparative examples, the first carbon-based material can be prepared and obtained by the following methods of the present application.

### (1) Preparation of the first carbon-based material

A flaky graphite was mechanically crushed, graded, spheronized, and purified to give natural spherical graphite. The obtained natural spherical graphite was mixed with a petroleum asphalt, afterwards, the mixed material was placed in a programmable temperature-raising equipment for heating treatment in stages, and then was cooled to room temperature at the end of the process to form an intermediate. The obtained intermediate was placed in a graphitization furnace, heat-treated, and demagnetized and sieved to give the first carbon-based material. During the above process, the process for preparing the first carbon-based material can be regulated as described earlier in the present application so that S₂/S₁ and graphitization degree of the first carbon-based material were within the range shown in Table 1.

S₂/S₁ of the first carbon-based material was tested according to the following method:
A binder for making a sample was mixed with the first carbon-based material powder and was applied onto a copper foil and was dried at 60°C for 30 min; the sample was cut into a size of 6mm×6mm and pasted on the sample stage of CP-type argon ion cross-section polisher; the sample was cut by a plasma to form a cross-section of the first carbon-based material which passed through the particle center of the first carbon-based material. The test instrument could be an argon ion cross-section polisher IB-09010 CP from JEOL, Japan. The cross-section of the first carbon-based material was scanned by a scanning electron microscope. The test could be conducted according to JY/T010-1996, and the test instrument could be a Sigma 300 scanning electron microscope from ZEISS, Germany. The region covering a distance of 0.25 L extending from the surface of the particles of the first carbon-based material to the inside of the particles was noted as the external region, the region inside the external region was noted as the internal region, and L denoted the short-axis length of the particles of the first carbon-based material. A total pore area S₁ of the external region of the first carbon-based material and a total pore area S₂ of the internal region of the first carbon-based material were calculated using an image processing software. The image processing software may be AVIZO.

In the following Examples and Comparative Examples, the second carbon-based material as used could be prepared by the following method of the present application, and the second carbon-based material of Comparative Example 3 was prepared without being coated with a carbon coating.

### (2) Preparation of the second carbon-based material

A petroleum coke was crushed to give petroleum coke raw materials; the petroleum coke raw materials were subjected to shaping and classifying to form a precursors; the precursors was granulated with asphalt as the binder; the granulated product was graphitized at 2800°C-3200°C to give an artificial graphite; the artificial graphite was coated with asphalt; after carbonization and screening, the second carbon-based material was obtained.

The above processes could be adjusted and controlled according to the preparation process of the second carbon-based material described earlier in the present application, so that the specific surface area, graphitization degree, number proportion of secondary particles and ID/IG of the second carbon-based material could fall within the ranges as shown in Table 1.

In the following Examples and Comparative Examples, the third carbon-based material as used were commercially available.

### Secondary batteries of Examples 1-32 and Comparative Examples 1-3 were prepared as follows.

The first carbon-based material (see Table 1 for details), carbon black (Super P) as the conductive agent, sodium carboxymethyl cellulose as the thickener, and styrene-butadiene rubber as the binder were thoroughly stirred and mixed in an appropriate amount of solvent deionized water at a weight ratio of 96.4:1:1.2:1.4 to form a first slurry. The second carbon-based material (see Table 1 for details), carbon black (Super P) as conductive agent, sodium carboxymethyl cellulose as the thickener, and styrene-butadiene rubber as the binder were thoroughly stirred and mixed in an appropriate amount of solvent deionized water at a weight ratio of 96.4:1:1.2:1.4 to form a second slurry. The first slurry and the second slurry were extruded together through a dual-chamber coating apparatus. The first slurry was applied on the negative electrode current collector copper foil, and the second slurry was applied on the first slurry; after drying and cold pressing, the negative electrode plate was obtained. The weight of the first slurry as applied and that of the second slurry were the same.

LiNi_{0.5}Co_{0.2}Mn_{0.3}O₂ (NCM523) was mixed with carbon black (Super P) as the conductive agent and polyvinylidene fluoride as the binder at a weight ratio of 96:2:2, and an appropriate amount of solvent NMP was added, and the mixture was stirred well to form a positive electrode slurry. The positive electrode slurry was applied on the two surfaces of the positive electrode current collector aluminum foil, and after drying and cold pressing, the positive electrode plate was obtained.

An organic solvent was obtained by mixing ethylene carbonate (EC), methyl ethyl carbonate (EMC), and diethyl l carbonate (DEC) at a volume ratio of 1:1:1, and then LiPF₆ was dissolved in the above organic solvent to prepare an electrolytic solution with a concentration of 1 mol/L.

A polyethylene membrane was used as the separator, and the separator, the positive electrode plate and the negative electrode plate prepared above were put in order, so that the separator was in the middle of the positive electrode plate and the negative electrode plate to play a role of separation, and then the electrode assembly was obtained after winding; the electrode assembly was placed in the outer package, dried and injected with electrolytic solution, and the secondary battery was obtained after vacuum encapsulation, resting, chemical formation, shaping, and other processes.

### Example 33

The secondary battery of Example 33 was prepared by a method similar to Example 1, except that the first slurry was prepared in a different way. The first and third carbon-based materials (see Table 2 for details, mass ratio, 50:50), the conductive carbon black (Super P), the sodium carboxymethyl cellulose as the thickener and styrene butadiene rubber as the binder were fully mixed in an appropriate amount of solvent deionized water in the weight ratio of 96.4:1:1.2:1.4 to form the first slurry.

### Tests for Performances

### (1) Test for the fast-charging performance of secondary battery

At 25°C, the secondary battery as prepared above was charged at a constant current of 0.33C to 4.3V and then was charged at a constant voltage to a current of 0.05C, after standing for 5min, it was discharged at a constant current of 0.33C to 2.8V. The actual capacity was recorded as C0.

Then the secondary battery was charged at a constant current of 1.0C0, 1.3C0, 1.5C0, 1.8C0, 2.0C0, 2.5C0, 3.0C0, respectively and in this order, to a charging cutoff voltage of 4.3V or negative cutoff potential of 0V (whichever was reached first), and after each charging was completed, it was discharged to the full battery discharging cutoff voltage of 2.8V at 1C0. The negative electrode potentials corresponding to 10%, 20%, 30% ......80% SOC (State of Charge) at different charging rates were recorded, and the rate vs. negative electrode potential curves were potted for different SOC states. After linear fitting, the charging rates when the negative electrode potential was 0V for different SOC states were obtained, and the charging rates were the charging windows for the respective SOC states, recorded as C10%SOC, C20%SOC, C30%SOC, C40%SOC, C50%SOC, C60%SOC, C70%SOC, and C80%SOC, respectively. The formula (60/C20%SOC + 60/C30%SOC + 60/C40%SOC + 60/C50%SOC + 60/C60%SOC + 60/C70%SOC + 60/C80%SOC) × 10% was used to calculate the charging time T, in minute, for charging this secondary battery from 10%SOC to 80%SOC. The shorter charging time T, the better the dynamic performance of the secondary battery would be.

### (2) Test for the storage performance of secondary battery

At 25°C, the secondary battery as prepared above was charged to 4.3V at a constant current of 1C, and then was charged to the current of 0.05C at a constant voltage, after standing for 5min, the secondary battery was charged to 2.8V at a constant current of 1C; the discharge capacity then was recorded as the discharge capacity before storage.

At 25°C, the secondary battery as prepared above was charged to 4.3V at the constant current of 1C, and then was charged to the current of 0.05C at a constant voltage. Afterwards, the secondary battery was stored in a thermostat at 60°C for 200 days. The capacity retention rate of the secondary battery stored at 60°C for 200 days (%) = the discharge capacity after storage/the discharge capacity before storage × 100%.

**Table 1**

| Nos. | First Region of the Negative Electrode Film | | | | Second Region of the Negative Electrode Film | | | | | Batttery Performances | |
|---|---|---|---|---|---|---|---|---|---|---|---|
| | First Carbon-based Material | | | | Second Carbon-based Material | | | | | | |
| | Quantity proportion of Primary Particles | S₂/S₁ | Graphitization Degree | I_{D}/I_{G} | Cartbon Coating Layer | Quantity proportion of Secondary Particles | I_{D}/I_{G} | Specific Surface Area (m²/g) | Graphitization Degree | Changing time T(min) | Capacity retention rate stored at 60°C for 200 days |
| Example 1 | 100% | 4.5 | 96.7% | 0.160 | Yes | 60% | 0.35 | 1.25 | 93.5% | 22.0 | 88.5% |
| Example 2 | 100% | 1.5 | 96.7% | 0.160 | Yes | 60% | 0.35 | 1.25 | 93.5% | 21.0 | 88.3% |
| Example 3 | 100% | 2 | 96.7% | 0.160 | Yes | 60% | 0.35 | 1.25 | 93.5% | 21.5 | 88.4% |
| Example 4 | 100% | 450 | 96.7% | 0.160 | Yes | 60% | 0.35 | 1.25 | 93.5% | 24.0 | 89.2% |
| Example 5 | 100% | 500 | 96.7% | 0.160 | Yes | 60% | 0.35 | 1.25 | 93.5% | 25.0 | 89.5% |
| Example 6 | 100% | 160 | 96.7% | 0.160 | Yes | 60% | 0.35 | 1.25 | 93.5% | 23.0 | 88.8% |
| Example 7 | 100% | 1.1 | 96.7% | 0.160 | Yes | 60% | 0.35 | 1.25 | 93.5% | 22.0 | 85.5% |
| Example 8 | 100% | 620 | 96.7% | 0.160 | Yes | 60% | 0.35 | 1.25 | 93.5% | 29.0 | 89.5% |
| Example 9 | 100% | 4.5 | 94.5% | 0.160 | Yes | 60% | 0.35 | 1.25 | 93.5% | 20.0 | 86.0% |
| Example 10 | 100% | 4.5 | 95.5% | 0.160 | Yes | 60% | 0.35 | 1.25 | 93.5% | 21.0 | 88.1% |
| Example 11 | 100% | 4.5 | 98.0% | 0.160 | Yes | 60% | 0.35 | 1.25 | 93.5% | 24.0 | 89.0% |
| Example 12 | 100% | 4.5 | 98.2% | 0.160 | Yes | 60% | 0.35 | 1.25 | 93.5% | 27.5 | 87.9% |
| Example 13 | 100% | 4.5 | 96.7% | 0.140 | Yes | 60% | 0.35 | 1.25 | 93.5% | 26.0 | 89.1% |
| Example 14 | 100% | 4.5 | 96.7% | 0.152 | Yes | 60% | 0.35 | 1.25 | 93.5% | 23.5 | 89.0% |
| Example 15 | 100% | 4.5 | 96.7% | 0.155 | Yes | 60% | 0.35 | 1.25 | 93.5% | 23.1 | 88.6% |
| Example 16 | 100% | 4.5 | 96.7% | 0.220 | Yes | 60% | 0.35 | 1.25 | 93.5% | 21.5 | 88.3% |
| Example 17 | 100% | 4.5 | 96.7% | 0.280 | Yes | 60% | 0.35 | 1.25 | 93.5% | 21.0 | 88.0% |
| Example 18 | 100% | 4.5 | 96.7% | 0.300 | Yes | 60% | 0.35 | 1.25 | 93.5% | 20.0 | 86.5% |
| Example 19 | 100% | 4.5 | 96.7% | 0.160 | Yes | 20% | 0.35 | 1.25 | 93.5% | 26 | 89.2% |
| Example 20 | 100% | 4.5 | 96.7% | 0.160 | Yes | 80% | 0.35 | 1.25 | 93.5% | 20.8 | 88.1% |
| Example 21 | 100% | 4.5 | 96.7% | 0.160 | Yes | 60% | 0.15 | 1.25 | 93.5% | 27.8 | 89.3% |
| Example 22 | 100% | 4.5 | 96.7% | 0.160 | Yes | 60% | 0.28 | 1.25 | 93.5% | 21.1 | 88.1% |
| Example 23 | 100% | 4.5 | 96.7% | 0.160 | Yes | 60% | 0.50 | 1.25 | 93.5% | 22.5 | 88.0% |
| Example 24 | 100% | 4.5 | 96.7% | 0.160 | Yes | 60% | 0.60 | 1.25 | 93.5% | 20.8 | 86.1% |
| Example 25 | 100% | 4.5 | 96.7% | 0.160 | Yes | 60% | 0.35 | 0.95 | 93.5% | 21.6 | 88.2% |
| Example 26 | 100% | 4.5 | 96.7% | 0.160 | Yes | 60% | 0.35 | 2.50 | 93.5% | 23.0 | 88.0% |
| Example 27 | 100% | 4.5 | 96.7% | 0.160 | Yes | 60% | 0.35 | 3.00 | 93.5% | 26.9 | 86.6% |
| Example 28 | 100% | 4.5 | 96.7% | 0.160 | Yes | 60% | 0.35 | 1.25 | 88.0% | 20.1 | 85.3% |
| Example 29 | 100% | 4.5 | 96.7% | 0.160 | Yes | 60% | 0.35 | 1.25 | 90.0% | 21.0 | 88.0% |
| Example 30 | 100% | 4.5 | 96.7% | 0.160 | Yes | 60% | 0.35 | 1.25 | 90.5% | 21.6 | 88.3% |
| Example 31 | 100% | 4.5 | 96.7% | 0.160 | Yes | 60% | 0.35 | 1.25 | 95.5% | 22.4 | 88.9% |
| Example 32 | 100% | 4.5 | 96.7% | 0.160 | Yes | 60% | 0.35 | 1.25 | 96.5% | 25.8 | 88.9% |
| Comparative Example 1 | 100% | 4.5 | 96.7% | 0.160 | / | / | / | / | / | 32.0 | 84.5% |
| Comparative Example 2 | / | / | / | / | Yes | 60% | 0.35 | 1.25 | 93.5% | 21.0 | 84.0% |
| Comparative Example 3 | 100% | 4.5 | 96.7% | 0.160 | No | 60% | 0.35 | 1.25 | 93.5% | 32.0 | 83.5% |

**Table 2**

| Nos. | First Region of the Negative Electrode Film | | | | | | | | Batttery Performances | |
|---|---|---|---|---|---|---|---|---|---|---|
| | First Carbon-based Material | | | | Third Carbon-based Material | | | | | |
| | Quantity proportio n of Primary Particles | S₂/S ₁ | Graphitizatio n Degree | I_{D}/I_{G} | Types | Particle morpholog y | Carbon Coatin g Layer | Dv5 0 (µm) | Chargin g Time T (min) | Capacit y retentio n rate stored at 60°C for 200 days |
| Example 1 | 100% | 4.5 | 96.7% | 0.16 0 | / | / | / | / | 22.0 | 88.5% |
| Comparativ e Example 33 | 100% | 4.5 | 96.7% | 0.16 0 | Artificia l Graphit e | Primary Particles | None | 15.6 0 | 21.8 | 88.9% |

As shown in Tables 1 and 2, by making the first region of the negative electrode film layer include the first carbon-based material having the pore structure and making the second region include the second carbon-based material having a carbon coating layer on at least part of the surface of the second carbon-based material, the batteries could have a high energy density and also have good dynamic performance and storage performance.

In Comparative Example 3, the second carbon-based material as used did not have a carbon coating layer on its surface, and thus the battery as prepared had poor fast charging ability, poor dynamic performance, and poor storage performance.

In view of the test results of Example 1 and Comparative Examples 1 and 2, it could be seen that since the first region of the negative electrode film layer included the first carbon-based material having a pore structure and the second region included the second carbon-based material having a carbon coating layer on at least part of its surface, the first carbon-based material and the second carbon-based material had outstanding synergistic advantages; moreover, the battery could have a longer storage life.

It should be noted that this application is not limited to the above embodiments. The above embodiments are only provided as examples, and within the technical solution of the present application, embodiments having substantially the same configuration as the technical idea and exerting the same effects are all included within the technical scope of the present application. In addition, various modifications to the embodiments that can be conceived by those skilled in the art without departing from the scope of the gist of the present application and other embodiments constructed by combining some constituent elements in the embodiments are also included in the scope of the present application.

## Claims

1. A secondary battery, comprising a negative electrode plate, wherein the negative electrode plate comprises a negative electrode current collector and a negative electrode film formed on at least one surface of the negative electrode current collector, and wherein the negative electrode film has a first surface away from the negative electrode current collector and a second surface opposite to the first surface, the negative electrode film has a thickness denoted as H, with a region within a thickness ranging from the second surface of the negative electrode film to 0.3 H being denoted as a first region of the negative electrode film and a region within a thickness ranging from the first surface of the negative electrode film to 0.3 H being denoted as a second region of the negative electrode film, wherein the first region comprises a first active material comprising a first carbon-based material having a pore structure and the second region comprises a second active material comprising a second carbon-based material which has a carbon coating layer on at least part of the surface thereof.

2. The secondary battery according to claim 1, wherein the second carbon-based material comprises secondary particles; and optionally, the quantity proportion of the secondary particles in the second carbon-based material is greater than or equal to 50%, and optionally from 60% to 80%.

3. The secondary battery according to claim 1 or 2, wherein the second carbon-based material has a graphitization degree less than that of the first carbon-based material.

4. The secondary battery according to any one of claims 1-3, wherein the second carbon-based material has a specific capacity less than that of the first carbon-based material.

5. The secondary battery according to any one of claims 1-4, wherein the second carbon-based material comprises at least one of artificial graphite or natural graphite; and optionally, the second carbon-based material comprises the artificial graphite.

6. The secondary battery according to any one of claims 1-5, wherein the second carbon-based material satisfies at least one of the following conditions:
(1) the second carbon-based material has a graphitization degree of from 90.0% to 95.5%, and optionally from 90.5% to 95.5%;
(2) the second carbon-based material has a powder OI value of from 2.0 to 6.5, and optionally from 2.0 to 6.0;
(3) the second carbon-based material has a volume average particle size Dv50 of 10.0 µm to 22.0 µm, and optionally from 11.5 µm to 20.0 µm;
(4) the second carbon-based material has a particle size distribution (Dv90-Dv10)/Dv50 of ≤1.65, and optionally from 0.90 to 1.65;
(5) the second carbon-based material has a tap density of 0.85 g/cm³ to 1.25 g/cm³ and optionally from 0.9 g/cm³ to 1.25 g/cm³;
(6) the second carbon-based material has a specific capacity of from 340 mAh/g to 360 mAh/g, and optionally from 345 mAh/g to 360 mAh/g;
(7) the second carbon-based material has a specific surface area of ≤ 2.5m²/g, and optionally from 0.95 m²/g to 2.5 m²/g; or
(8) the second carbon based material satisfies I_{D}/I_{G} ≥ 0.280, and optionally 0.280 ≤ I_{D}/I_{G} ≤ 0.500, in which I_{D} represents the D peak intensity at 1350 ± 50cm⁻¹ of the Raman spectrum and I_{G} represents the G peak intensity at 1580 ± 50cm⁻¹ of the Raman spectrum.

7. The secondary battery according to any one of claims 1-6, wherein the first carbon based material has a carbon coating layer on at least part of the surface thereof.

8. The secondary battery according to any one of claims 1-7, wherein the first carbon-based material comprises at least one pore structure with a pore area greater than or equal to 0.15 µm², and optionally at least one pore structure with a pore area of from 0.15 µm² to 2.0 µm².

9. The secondary battery according to any one of claims 1-8, wherein the first carbon-based material comprises an external region and an internal region located inside the external region, with the external region being a region formed from extending a distance of 0.25 L from the surface of the particles of the first carbon-based material towards the interior of the particles, and L being the short-axis length of the particles of the first carbon-based material, and wherein the total pore area of the external region is denoted as S₁ and the total pore area of the internal region is denoted as S₂, S₂ > S₁, and optionally 1.5 ≤ S₂/S₁ ≤ 500, or 2 ≤ S₂/S₁ ≤ 450.

10. The secondary battery according to claim 9, wherein
the pore structure in the external region of the first carbon-based material has an area of less than or equal to 0.15 µm², and optionally less than or equal to 0.10 µm²; and/or
the pore structure in the internal region of the first carbon-based material comprises at least one pore structure having an area greater than or equal to 0.15 µm², and optionally at least one pore structure having an area of from 0.15 µm² to 2.0 µm².

11. The secondary battery according to any one of claims 1-10, wherein the first carbon based material comprises primary particles; and optionally, the quantity proportion of the primary particles in the first carbon based material is greater than or equal to 50%.

12. The secondary battery according to any one of claims 1-11, wherein the first carbon based material satisfies 0.152 ≤ I_{D}/I_{G} ≤ 0.280, and optionally 0.155 ≤ I_{D}/I_{G} ≤ 0.220, in which I_{D} represents the D peak intensity at 1350 ± 50cm⁻¹ of the Raman spectrum, and I_{G} represents the G peak intensity at 1580 ± 50cm⁻¹ of the Raman spectrum.

13. The secondary battery according to any one of claims 1-12, wherein the first carbon-based material has a diffraction peak of 101 crystal plane of the 3R phase in the X-ray diffraction pattern.

14. The secondary battery according to any one of claims 1-13, wherein the first carbon-based material does not have a diffraction peak of 012 crystal plane of the 3R phase in the X-ray diffraction pattern.

15. The secondary battery according to any one of claims 1-14, wherein the first carbon-based material satisfies at least one of the following conditions (1) - (10):
(1) the first carbon-based material has a specific surface area of from 1.0 m²/g to 2.1 m²/g, and optionally from 1.1 m²/g to 2.0 m²/g;
(2) the first carbon-based material has a volume average particle size Dv50 of from 8.0 µm to 25.0µm, and optionally from 8.0 µm to 22.0 µm;
(3) the first carbon-based material has a volume average particle size Dv90 of from 16.0 µm to 45.0 µm, and optionally from 16.5 µm to 42.0 µm;
(4) the first carbon-based material has a particle size distribution (Dv90-Dv10)/Dv50 of ≤ 1.55, and optionally from 0.9 to 1.50;
(5) the first carbon-based material has a powder compaction density under a pressure of 20000N of 1.65 g/cm³ to 2.0 g/cm³, and optionally from 1.68 g/cm³ to 1.98 g/cm³;
(6) the first carbon-based material has a tap density of from 0.85 g/cm³ to 1.30 g/cm³, and optionally from 0.90 g/cm³ to 1.25 g/cm³;
(7) the first carbon-based material has a specific capacity of ≥ 355 mAh/g, and optionally from 355 mAh/g to 370 mAh/g;
(8) the first carbon-based material has a graphitization degree of ≥ 95.5%, and optionally from 95.5% to 98%;
(9) the first carbon-based material has a weight loss rate of ≤ 52% and optionally from 8% to 48% at a temperature of from 35°C to 790°C, as determined by thermal weight loss analysis under air atmosphere;
(10) the first carbon-based material has a maximum weight loss rate of ≤ 5.0%/min and optionally of 4.8%/min, as determined by thermal weight loss analysis under air atmosphere.

16. The secondary battery according to any one of claims 1-15, wherein the first active material further comprises a third carbon-based material comprising an artificial graphite having a morphology of primary particles.

17. The secondary battery according to claim 16, wherein the artificial graphite having the morphology of primary particles does not have a carbon coating layer on the surface thereof.

18. The secondary battery according to claim 16 or 17, wherein the third carbon-based material has a mass proportion, in the first active material, of less than or equal to 70wt%, and optionally from 15wt% to 60wt%.

19. The secondary battery according to any one of claims 16-18, wherein the third carbon-based material satisfies at least one of the following conditions (1) to (7):
(1) the third carbon-based material has a graphitization degree of from 92.5% to 95.5%, and optionally from 92.7% to 95.5%;
(2) the third carbon-based material has a powder OI value of from 4.5-11.5, and optionally from 4.5 to 11.0;
(3) the third carbon-based material has a particle size distribution (Dv90-Dv10)/Dv50 of ≤ 1.65, and optionally from 0.90 to 1.65;
(4) the third carbon-based material has a volume average particle size Dv50 of from 12.0 µm to 22.0 µm, and optionally from 13.5 µm to 20.0 µm;
(5) the third carbon-based material has a specific surface area of 1.0 m²/g to 2.0 m²/g, and optionally from 1.05 m²/g to 1.95 m²/g;
(6) the third carbon-based material has a tap density of from 0.95 g/cm³ to 1.25 g/cm³, and optionally from 1.00 g/cm³ to 1.25 g/cm³; or
(7) the third carbon-based material has a specific capacity of from 350 mAh/g to 363 mAh/g, and optionally from 352 mAh/g to 362 mAh/g.

20. The secondary battery according to any one of claims 1-19, wherein the first region and/or the second region further comprises a silicon-based material; optionally, the first region and the second region comprise a silicon-based material, and the mass proportion of the silicon-based material in the first region is less than or equal to that of the silicon-based material in the second region.

21. The secondary battery according to any one of claims 1-20, wherein the first active material and/or the second active material is comprised in an intermediate region located between the first region and the second region.

22. The secondary battery according to any one of claims 1-21, wherein the negative electrode film satisfies at least one of the following conditions (1) - (5):
(1) the negative electrode film layer has a porosity of from 18.0% to 36.7%, and optionally from 19.0% to 34.0%;
(2) the negative electrode film layer has a compaction density of from 1.45 g/cm³ to 1.90 g/cm³, and optionally from 1.50 g/cm³ to 1.85 g/cm³;
(3) the negative electrode film layer has an areal density of from 5.0 mg/cm² to 25.0 mg/cm², and optionally from 5.5 mg/cm² to 22.5 mg/cm²;
(4) the negative electrode film layer has an OI value of less than or equal to 35.0, and optionally from 8.0 to 35.0; or
(5) the negative electrode film layer has a thickness of from 70 µm to 250 µm and optionally from 90 µm to 220 µm.

23. An electrical device comprising the secondary battery according to any one of claims 1-22.
